# EUROPEAN PATENT APPLICATION

(11) **EP 4 645 831 A1**
(43) Date of publication of application: **05.11.2025**
(21) Application number: 25172909.1
(22) Date of filing: 28.04.2025
(51) Int. Cl.: H04L 67/56, H04L 43/0829, H04L 49/90, H04L 69/163, H04L 69/326, H04W 28/14, H04L 67/289

(54) **SYSTEMS FOR AND METHODS FOR OFFLOADING NETWORK PROCESSING**

(30) Priority: 30.04.2024 US 202418651301
(71) Applicant: Avago Technologies International Sales Pte. Limited, Singapore 768923 (SG)
(72) Inventor: Mamidwar, Rajesh Shankarrao, Irvine, 92618 (US); Katre, Prashant, Irvine, 92618 (US)
(74) Representative: Dilg, Haeusler, Schindelmann Patentanwaltsgesellschaft mbH

(57) **Abstract**

Offloading of network processing is provided. A method performed by a client device (305) can include establishing a transport layer connection (405) with a server (315) over a network via an access point (320) or a modem (325) in wireless communication with the client device (305). The method can include establishing a pipe (430) with one of the access point (320) or the modem (325) to transfer data. The method can include communicating, via the pipe (430) to one of the access point (320) or the modem (325), a copy of one or more buffers (420) of one or more sockets used for the transport layer connection (405) by the client device (305). The access point (320) or the modem (325) can be configured to use the copy of the one or more of buffers (420) to handle re-transmission of one or more packets to the server (315) via the transport layer connection (405) instead of the client device (305).

## Description

### Field of the Disclosure

This disclosure generally relates to systems and methods for communication between network devices, such as between a client device and a network gateway device (e.g., an access point (AP) or cable modem (CM)).

### Background of the Disclosure

In the last few decades, the market for wireless communications devices has grown by orders of magnitude, fueled by the use of portable devices, and increased connectivity and data transfer between all manners of devices. Digital switching techniques have facilitated the large-scale deployment of affordable, easy-to-use wireless communication networks. Furthermore, digital and radio frequency (RF) circuit fabrication improvements, as well as advances in circuit integration and other aspects have made wireless equipment smaller, cheaper, and more reliable. Wireless communication can operate in accordance with various standards such as IEEE 802.11x, Bluetooth, global system for mobile communications (GSM), and code division multiple access (CDMA). As higher data throughput, density of networks, and other changes develop, increasingly latency-sensitive data is provided across various networks. However, network congestion and complexity can impose delay between various communications. Dropped packets can exacerbate latency according to a retransmission time.

### Summary

A network architecture can include any number of client devices and a gateway of a first network (e.g., a local network). The client devices can communicate with a server remote from the first network via the gateway, such that a communications path between the gateway and the server is a subset links of a communications path from the server to any of the client devices. Accordingly, the gateway-server link may exhibit lower latency, lower hop count, or a higher rate of successful conveyance of messages having a fixed TTL (time-to-live) as the client device-gateway link. At least a portion of the lower latency or other attributes of the gateway-server link, relative to the client device-server link owes to the channel length alone. Additionally, in some embodiments, some client devices may enter sleep states, or be compute-limited such that subsequent transmissions may incur additional latency waiting for a device to wake, or to process a received message, among other latency sources.

According to embodiments of the present disclosure, the client device can offload a portion of network overhead operations to the gateway. For example, the gateway can manage retransmissions between the client and the server. The offloading may be implemented via a local process of the devices or according to an interface with a remote device (e.g., a latency management server). In some embodiments, such offloading may reduce client device power use so as to extend battery life or improve client device operating temperatures, lower latency, free available compute for other tasks, or otherwise benefit device operation.

According to the logical position of the gateway, proximal to the server from the client device, and proximal to the client device from the server, the offloading can decrease latency of a detection of lost packets, as well as retransmission of those packets. For example, the gateway can maintain a copy of a buffer for a client device. Upon a detection of a packet loss, the gateway can cause a retransmission of the lost packet based on the data in the copy of the buffer. The retransmission can include requesting a retransmission of a downlink packet from the server or generating an uplink packet for transmission to the server upon determining a loss of an uplink packet provided by a client device. For example, the gateway can establish or model a transport layer stack (e.g., TCP or UDP) to generate packets or modify packets for retransmission. In some embodiments, the modeled transport layer stack may be configured to modify a subset of header bits for retransmission (e.g., retransmission flags, timestamps, or sequence numbers), omitting other portions of functionality, and may thus be implemented according to lower compute resources (e.g., chip area, logic elements, memory, processor cycles, or data path latency) relative to other stacks implemented, such as a transport layer stack of the client device. The modeled stack can generate packets or requests therefore (e.g., generation or non-generation of ACKs) addressed from the client device, such that the retransmission is transparent to the server, relative to generation of the retransmission packets/
ACKs by the client device.

The gateway device can maintain a buffer for all or a subset of client devices, or links corresponding with such devices. For example, the gateway device can maintain an uplink buffer or a downlink buffer for a client device, or a particular port thereof. The gateway device can implement numerous such links to effect packet retransmission for an uplink or downlink between one or more ports of any number of client devices. For example, the gateway device can maintain the buffer copies for socket buffers according to an instruction of to establish such a copy from a client device. In this way, the client device can offload retransmission or other network processing to the gateway for all or a subset of ports, or data flow directions (e.g., uplink or downlink). For example, the client device can offload retransmission for latency sensitive data according to a port, internet protocol (IP) address, application level flag, data type, or other indication of latency sensitive data.

Various embodiments disclosed herein are related to a method. The method or various operations thereof may be performed by a client device. The method can include establishing a transport layer connection with a server over one or more networks via one of an access point or a modem, the client device in wireless communication with one of the access point or the modem. The method can include establishing a pipe with one of the access point or the modem to transfer data. The method can include communicating, via the pipe to one of the access point or the modem, a copy of one or more buffers of one or more sockets used for the transport layer connection. One of the access point or the modem can be configured to use the copy of the one or more of buffers to handle re-transmission of one or more packets to the server via the transport layer connection instead of the client device.

In some embodiments, the method includes establishing, by the client device located in a residential computing environment, the transport layer connection with the server via an Internet Service Provider (ISP) providing access to the Internet via one of the access point or the modem.

In some embodiments, the method includes establishing, by one of the access point or the modem using the copy of the one or more buffers, a transport layer stack for the transport layer connection between the server and the client device. In some embodiments, the method includes modeling, by one of the access point or the modem using the copy of the one or more buffers, a transport layer stack for the transport layer connection between the server and the client device instead of using a transport layer stack.

In some embodiments, the method includes establishing the pipe at a layer in the network stack below the transport layer. In some embodiments, the method includes establishing the pipe at a machine access control (MAC) layer. In some embodiments, the method includes establishing the pipe using a user datagram protocol (UDP).

In some embodiments, one of the access point or the modem is further configured to detect a loss of a packet for the transport layer connection between the client device and the server and causing re-transmission of the packet from the server. In some embodiments, one of the access point or the modem is further configured to handle encryption or decryption of packets communicated via the transport layer connection between the client device and the server.

Various embodiments disclosed herein are related to a system. The system includes an access point in wireless communication with a client device in a first network and with one or more devices providing access via the Internet to one or more servers on a second network, the client device having a transport layer connection with a server of the one or more servers. The system includes one or more processors of the access point. The one or more processors can be configured to establish a pipe with the client device to transfer data. The one or more processors can be configured to receive, via the pipe from the client device, a copy of one or more buffers of one or more sockets used for the transport layer connection by the client device. The one or more processors can be configured to use the copy of the one or more of buffers to handle re-transmission of one or more packets to the server via the transport layer connection instead of the client device.

In some embodiments, the access point is further configured to use the copy of the one or more buffers to establish a transport layer stack for the transport layer connection between the server and the client device. In some embodiments, the access point is further configured to use the copy of the one or more buffers to model a transport layer stack for the transport layer connection between the server and the client device instead of using a transport layer stack.

In some embodiments, the pipe is established at a layer in the network stack below the transport layer. In some embodiments, the pipe is established at a machine access control (MAC) layer. In some embodiments, the pipe is established using a user datagram protocol (UDP).

In some embodiments, the access point is further configured to detect a loss of a packet for the transport layer connection between the client device and the server and to cause re-transmission of the packet from the server responsive to the detected loss.

Various embodiments disclosed herein are related to a further system. The system can include a modem in communication with a client device in a first network and providing access to the Internet, the client device having a transport layer connection traversing the modem via the Internet with a server on a second network. The system can include one or more processors. The one or more processors can be configured to receive, via a pipe between the modem and the client device, a copy of one or more buffers of one or more sockets used by the client device for the transport layer connection with the server. The one or more processors can be configured to detect a drop of a packet via the transport layer connection. The one or more processors can be configured to, responsive to the detection, cause re-transmission of the packet by the server via the transport layer connection instead of the client device.

In some embodiments, the client device is in communication with the modem via an access point. In some embodiments, the modem is included in an access point. In some embodiments, the one or more processors are configured to one of establish or model a transport layer stack for the transport layer connection between the client device and the server.

### Brief Description of the Drawings

Various objects, aspects, features, and advantages of the disclosure will become more apparent and better understood by referring to the detailed description taken in conjunction with the accompanying drawings, in which reference characters identify corresponding elements throughout. In the drawings, like reference numbers generally indicate identical, functionally similar, and/or structurally similar elements.
FIG. 1A is a general schematic block diagram of a communication system according to some embodiments;
FIG. 1B is a general schematic block diagram of portion of the communication system illustrated in FIG. 1A according to some embodiments;
FIG. 1C is a general schematic block diagram of applications in communication with cloud infrastructure for the communication system illustrated in FIG. 1A according to some embodiments;
FIG. 1D is a general schematic block diagram of an application for a communication system illustrated in FIG. 1A according to some embodiments;
FIG. 1E is a general schematic block diagram of an application for a communication system illustrated in FIG. 1A according to some embodiments;
FIG. 1F is a schematic block diagram of the communication system illustrated in FIG. 1A including a server configured for augmented reality/virtual reality and/or metaverse applications according to some embodiments;
FIG. 2A is a block diagram of embodiments of a computing device; and
FIG. 2B is a block diagram depicting a computing environment comprising client device in communication with cloud service providers;
FIG. 3 is a network diagram for a system to offload network processing between a client device and a network gateway, according to some embodiments;
FIG. 4 is a logical network diagram for a system to offload network processing between a client device and a network gateway, according to some embodiments;
FIG. 5 is a sequence diagram for offloading network processing, according to some embodiments;
FIG. 6 is a sequence diagram for offloading network processing, according to some embodiments;
FIG. 7 is a flow diagram for a method of offloading network processing, according to some embodiments.

The details of various embodiments of the methods and systems are set forth in the accompanying drawings and the description below.

### Detailed Description

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.

The following IEEE standard(s), including any draft versions of such standard(s), are hereby incorporated herein by reference in their entirety and are made part of the present disclosure for all purposes: IEEE 802.11^{™}, IEEE 802.14^{™}, IEEE P802.3^{™} and IEEE Ethernet standard systems including but not limited to LRM, VSR, SR, MR, LR, ZR and KR. Although this disclosure may reference aspects of these standard(s), the disclosure is in no way limited by these standard(s).

Devices provided by ISPs and customer-owned AR/VR setups, mobile phones, OTT devices, and cloud gaming clients are configured for low latency uses in some embodiments. Some embodiments of systems and methods disclosed herein provide a real time or near real time system to monitor end to end latencies. In some applications, timestamp synchronization with applications at intermediate nodes and end devices use precision time protocol (PTP) synchronization protocols for latency monitoring. In some embodiments, latency is monitored from end-to-end so that latency of all devices within the entire end-to-end process is considered, thereby enabling identification of the origins of substantial latency.

In some embodiments, the systems and methods achieve synchronization of the wall clock across all nodes and end-user devices by employing timestamps for low latency data packets at each node. The determination of latency at each node is made by applications at each node. The determination of latency is reported back to a server that communicates with the applications. The systems and methods allow the communication system to distinguish whether latency arises from the home network, an ISP, or cloud servers.

A latency application server extension is integrated into the ISP-provided modem or router in some embodiments. In some embodiments, the server extensions have the ability to filter and transmit all necessary information to the ISP's cloud server or share open data with application developers. The server extension can store or receive information about a customer's low latency plan subscription and can track low latency usages inside the home in some embodiments.

A server extension can refer to a software component or module that extends the functionality of a server application (e.g., a latency application) in some embodiments. Server extensions can be used in various server environments such as web servers, application servers, ISP servers, and database servers to enhance their capabilities or to add specific features tailored to the needs of users or applications and can be installed using extension files. The extensions can be installed on any of the devices discussed herein. In some embodiments, the extensions are provided on an ISP controlled server in the cloud, an ISP controlled modem or access point, a third party Wi-Fi access point, a third party modem, or ISP provided low latency devices.

In some embodiments, the server extension allows a user to select device applications for different latency treatment. A server within the residence can use classifiers and queues to reduce latency for low latency devices. The server can be part of a router, set top box, hub, etc. in some embodiments. The server extensions support multiparty involvement (e.g., cloud managers, ISPs, application developers and silicon vendors) for end to end usages in some embodiments.

With respect to latency, generally, latency refers to an amount of time a system, application or device takes to process and respond to a request in some embodiments. With respect to low latency, low latency refers to such amount of time being within a threshold, a performance level, a user experience level or requirements of the application or usage in some embodiments. The threshold, performance level, user experience level or requirements of the application may vary based on context, such as a type of application and/or use case and the systems, networks, and computer environment for which such use cases and/or application operate or execute. Low latency from a perspective of a computing environment refers to an ability of a computing system or network to provide responses without unacceptable or unsuitable delay, or otherwise minimal delay, for the context or use case of which such responses are provided. System criteria and application parameters can affect a threshold for low latency. The threshold can be fixed or variable (e.g., depending upon conditions or actual needs or requirements at a particular time). With respect to low latency networks and systems in a context of network and network communication, low latency describes a computer network, systems and environment that is designed, configured and/or implemented to support applications, network traffic and processing operations to reduce, improve latency or to meet a low latency threshold. End-to-end latency refers to latency between two points in a network or communication system. The two points can be a source of data and a consumer of data, or intermediate points therebetween in some embodiments.

A low latency device refers to any hardware, device component, or system that has low latency considerations or requirements in some embodiments. A low latency device can be a telecommunications, remote control systems, gaming, audio processing, financial trading, augmented reality and/or virtual reality device where delays can impact user experience or system performance. There may be levels of low latency requirements where one low latency device has a more stringent requirement than another low latency device in some embodiments. A low latency path refers to a path for low latency operation in some embodiments. Latency data refers to any indication of latency associated with a communication or configuration data for low latency operation or control in some embodiments. A low latency application refers to the use or performance of a low latency operation in some embodiments. A low latency device or software program can be used to perform the low latency operation (video conferencing, cloud gaming, augmented reality/virtual reality (AR/VR) applications, and metaverse applications).

Some embodiments relate to a system including a first device and an application. The application operates on the first device and is configured to append time stamps to a first packet received by the first device. The time stamps indicate a first time the first packet is received by the first device and a second time the first packet is sent by the first device. Append refers to adding or attaching information to a data structure (e.g., a packet) in some embodiments.

In some embodiments, the application is configured to determine latency information associated with communication through the first device using the time stamps. The time stamps include a first time stamp for the first time and a second time stamp for the second time. In some embodiments, the application is configured to provide a second packet including the latency information and communicate the second packet to a server remote from the first device via a virtual communication link. In some embodiments, the first time stamp is an ingress time stamp and the second time stamp is an egress time stamp.

In some embodiments, the time stamps are provided as part of a precision time protocol. In some embodiments, the first packet is for use in a low latency operation. In some embodiments, the time stamps are derived from a satellite time source. In some embodiments, the latency information includes a history of time stamps. In some embodiments, the first device is a user device, cloud infrastructure, internet service provider infrastructure, a set top box, a cable modem, or a wireless router.

Some embodiments relate to a non-transitory computer readable medium having instructions stored thereon that, when executed by a processor, cause a processor to receive a first packet from a first node. The first packet includes latency information associated with a second packet provided to the first node for a low latency application. The instructions also cause the processor to provide a third packet to the first node or other nodes to increase priority for packets for the low latency application if the latency information indicates that a latency threshold for the low latency application has not been met. The first node can be part of a communication system including a cable, fiber optic, or wireless network. The other nodes and the first node are in path associated with the second packet provided to the first node for the low latency application.

In some embodiments, the processor is disposed on a server remote from the first node. In some embodiments, the server is in communication with internet service provider infrastructure and the third packet is provided to the internet service provider infrastructure. In some embodiments, the third packet is provided to internet service provider infrastructure, a set top box, a cable modem, or a wireless router.

In some embodiments, the instructions cause the processor to provide a fourth packet to the first node or the other nodes to decrease priority for packets for the low latency application if the latency information indicates that the latency threshold for the low latency application has been met and additional bandwidth is available.

In some embodiments, the latency information comprises a user identification.

Some embodiments relate to a method of providing low latency service. The method includes providing a first time stamp for a first packet provided to a first device. The first packet can be for reception by a low latency device or as being for use in a low latency operation. The method also includes providing a second packet including latency information to a server remote from the first device via a virtual communication link.

In some embodiments, the method also includes providing a second time stamp for the first packet provided to the first device. In some embodiments, the first time stamp is an ingress time stamp and the second time stamp is an egress time stamp. In some embodiments, the first device includes an application configured to append the first time stamp to the first packet.

Some embodiments relate to a server. The server includes a first application configured to monitor end-to-end latency for a network. The network includes devices. The application is configured to receive latency information from at least one of the devices. The latency information includes time stamps or time period data for a packet to communicated across a device or a link. Monitoring or monitor refers to an action where performance is observed, checked, and/or recorded and can generally occur over a period of time.

A non-transitory computer readable medium have instructions stored thereon that, when executed by a processor, cause the processor to receive a first packet from a first node. The first packet includes latency information associated with a second packet provided to the first node for a low latency application. The instructions also cause the processor to provide a subscription offer in response to the latency information. The first node is part of a communication system comprising a cable, fiber optic, or wireless network. The other nodes and the first node are in path associated with the second packet provided to the first node for the low latency application.

In some embodiments, the first device is a set top box, a cable modem, or a wireless router. A device can refer to any apparatus, system, or component for performing an operation in some embodiments. A low latency device can refer to any device capable of performing a low latency operation. A low latency operation refers to an operation where higher than low latency operation can affect performance level, user experience level or a requirement of the application or use in some embodiments. A packet refers to a unit of data that is transmitted over a network in some embodiments. The packet can include a header and a payload. Time stamps and latency information can be appended to a packet in some embodiments. Classify or classifying may refer to any operation for determining a classification, grouping or arrangement in some embodiments. For example, a packet can be classified as being for a low latency device or application by reviewing an address, appended data, by its type of data, or other information in some embodiments. Bandwidth may refer to an amount of capacity for communication in some embodiments. Priority refers to a precedence, hierarchical order, level, or other classification in some embodiments. For example, packets can be ordered for transmission in accordance with a priority associated with a latency requirement in some embodiments. A cable, fiber optic, or wireless network refers to any network that uses one or more of a fiber optic cable, a coaxial cable, an ethernet cable, other wire, or wireless medium in some embodiments.

For purposes of reading the description of the various embodiments below, the following descriptions of the sections of the specification and their respective contents may be helpful:
- Section A describes a communication system that may be useful for practicing the embodiments described herein.
- Section B describes low latency applications that may be useful for practicing the embodiments described herein.
- Section C describes embodiments of network environments and computing environments that may be useful for practicing the embodiments described herein.
- Section D describes embodiments of systems and methods of offloading network processing.

### A. Communication System

Network latency can significantly impact internet connectivity, user experience, and the performance of various online applications and services. Some embodiments provide information for ISPs to address end-to-end latency issues through network optimization, infrastructure upgrades, and efficient routing to ensure a reliable and responsive internet experience for their customers. In some embodiments, tools are provided so that cloud servers of ISPs can collect analytics data and can re-configure ISP provided devices like cable modems, GPON modems or set top boxes. In some embodiments, the systems and methods allow multiple parties (e.g., more than one ISP, cloud service providers, public switch operators, and application developers) to address low latency usages including but not limited to video conferencing, augmented reality (AR)/ virtual reality (VR), and metaverse end to end usage. In some embodiments, the systems and methods allow multiple parties to cooperate and work together to address latency issues. In some embodiments, the systems and methods can be used with Wi-Fi networks, Ethernet networks, modems, access network, backbone networks, IXPs, and cloud infrastructure and allow multiple teams to work together for latency optimizations across various mediums.

In some embodiments, a latency monitor measures and reports latency for each link, device, and end application. The reports are provided to controllers of the paths, such as, ISPs, application developers, end users, etc. so that actions can be taken once low latency requirements are not met. In some embodiments, systems and methods provide a seamless latency monitoring, analysis, and optimization. The analysis of latency measurements and reporting allows for identification of latency contributors in real time and optimization by mapping traffic requiring low latency traffic to low latency queues or paths. In some embodiments, devices in the path are provided with an application (e.g., software) for effecting monitoring, analysis, and optimization. The analysis of latency measurements and reporting allows for control of devices to appropriately provide low latency traffic to low latency queues or paths. The applications can be in communication with a latency server (e.g., a server for the applications) that coordinates operations and accumulates data according to the monitoring, analysis, and optimization operations. An application or app may refer to a software program or module configured to perform specific functions or tasks on an electronic device.

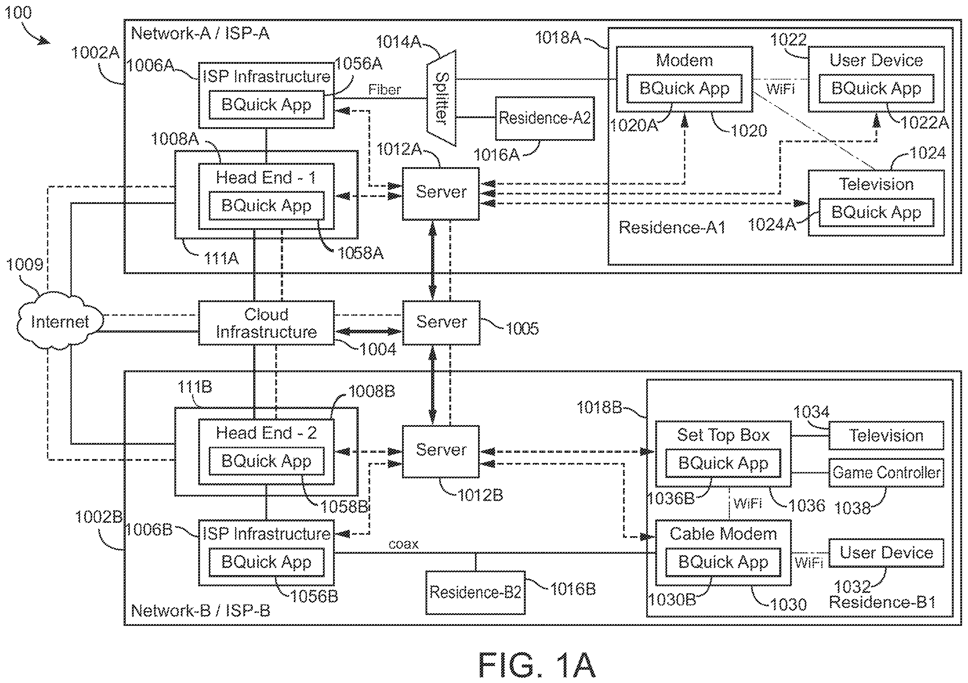

With reference FIG. 1A a communication system 100 includes a network 1002A for residences 1016A and 1018A, a network 1002B for residences 1016B and 1018B, a cloud infrastructure 1004, and a BQUICK_TOP server 1005. Communication system 100 advantageously is configured so that information is provided to ISPs to address latency issues through network optimization, infrastructure upgrades, service upgrades and/or efficient routing to ensure a reliable and responsive internet experience for customers can be achieved on networks 1002A and 1002B. BQUICK_TOP server 1005 is configured to receive the information and address latency issues in some embodiments. BQUICK_TOP server 1005 is in communication (e.g., via direct or virtual connections) with cloud infrastructure 1004 and networks 1002A and B (residences 1016A-B and 1018A-B) to share information, reports, commands, and other data in some embodiments. BQUICK_TOP server 1005, infrastructure 1004 and residences 1016A-B and 1018A-B can utilize any form of communication mediums, networks, protocols, etc. to communicate data and information.

Cloud infrastructure 1004 includes a collection of hardware, software, networking, and other resources that enable the delivery of cloud computing services over the internet in some embodiments. Cloud infrastructure 1004 includes physical servers, storage devices, networking equipment, and other hardware components hosted in data centers distributed across multiple geographic locations in some embodiments. The data centers are equipped with high-performance servers, storage arrays, and networking gear to support the computing needs of cloud services in some embodiments. The cloud infrastructure 1004 is configured to provide high-speed, redundant network links, routers, switches, and content delivery networks (CDNs) for delivery of low-latency, high-bandwidth content for users in some embodiments. Cloud infrastructure 1004 includes block storage (e.g., Amazon EBS, Azure Disk Storage), object storage (e.g., Amazon S3, Google Cloud Storage), and file storage (e.g., Amazon EFS, Azure Files) in some embodiments.

Residences 1016A and 1018A can include a network associated with a first ISP and residences 1016B and 1018B can include a network associate with the same ISP or a second ISP. In some embodiments, the networks for residences 1016A and 1018A and residences 1016B and 1018B are part of broadband access server (BAS) networks. Network 1002A includes infrastructure 1006A, a head end 1008A, a BQUICK ISP_A server 1012A, splitter 1014A, equipment for residence 1016A and equipment for residence 1018A. Equipment for residence 1018A includes an optical network unit (ONU) 1020, a user device 1022, and a television 1024. Modem or optical network unit 1020 can be a fiber optic router, switch, gateway etc. and have Wi-Fi capabilities for a Wi-Fi network associated with residence 1018A in some embodiments. Optical network unit 1020 is a GPON modem or optical network terminal (ONT) in some embodiments. GPON is a technology that allows for high-speed internet access over fiber optic cables. Optical network unit 1020 converts the optical signals transmitted over the fiber optic cables into electrical signals and/or radio frequency signals that can be used by devices in residence 1018A. Although system 100 is shown communicating via coaxial cable and optical cable, ground based wireless communications and satellite communications can be utilized in system 100. Optical network unit 1020 is generally provided by an optical network operator (ISP-A) and can be referred to as an optical network termination. BQUICK_TOP server 1005 and BQUICK ISP_A server 1012A can be Broadcom Analytics System (BAS Servers) that collect analytics data from various devices like modems, set top boxes, and other devices.

User device 1022 is a smart phone, AR/VR device, tablet, lap top computer, smart watch, exercise equipment, smart appliance, camera, headphone, automobile, another computing device, etc. Residence 1016A can have similar devices to residence 1018A. Television 1024 and user device 1022 communicate with optical network unit 1020 via a wireless network or wired connections. In some embodiments, optical network unit 1020 can include an ethernet router including wired connections to user device 1022, wireless modems, and television 1024.

Head end 1008A includes routers, switches, servers, and/or other infrastructure for communicating between ISP infrastructure 1006A and cloud infrastructure 1004. ISP infrastructure 1006A includes routers, switches, servers, and/or other infrastructure for communicating between head end 1008A and splitter 1014A. Splitter 1014A communicates via fiber optic cables between infrastructure 1006A and residences 1016A and 1018A., BQUICK ISP_A 1012A BQUICK_TOP server 1005 communicates with server 1012, infrastructure 1006A, head end 1008A and residences 1016A and 1018A via direct or indirect communication (e.g., via the Internet).

Splitter 1014A is a fiber optic splitter in some embodiments. Splitter 1014A can be used in fiber optic networks to divide an incoming optical signal into multiple separate signals for residences 1016A and 1018A and unify signals into one or more signals for infrastructure 1006A. Splitter 1014A can be configured for a passive optical network (PON) architecture. Bidirectional communication occurs across splitter 1014A in some embodiments. In some embodiments, splitter 114 is a conducting cable-type splitter (e.g., for a coaxial, not optical cable). Splitter 114 includes repeaters, amplifiers, signal conditioners, etc. in some embodiments.

BQUICK ISP_A server 1012A a computing device, such as a machine equipped with one or more processors, memory, and storage drives. BQUICK ISP_A server 1012A delivers assorted services to customers (e.g., residences 1016A and 1018A) for the ISP in some embodiments. BQUICK_TOP server 1005 is configured as a central hub responsible for managing and routing internet traffic for its subscribers. BQUICK ISP_A server 1012A handles requests from users such as accessing websites, sending emails, streaming content, and downloading files. BQUICK ISP_A server 1012A manages network protocols, assigns IP addresses, and facilitates communication between different devices on the internet. BQUICK ISP_A server 1012A includes operating systems like Linux or Windows Server, along with networking software such as routing protocols (e.g., BGP, OSPF), DNS (Domain Name System) servers, dynamic host configuration protocol (DHCP) servers for IP address allocation, and firewall/ security software to protect system 100 from cyber threats. BQUICK ISP_A server 1012A employs traffic shaping and quality of service (QoS) mechanisms to prioritize and optimize internet traffic, ensuring a smooth and consistent user experience for all subscribers. These operations can involve managing bandwidth allocation, prioritizing certain types of traffic (e.g., VoIP or video streaming), and mitigating network congestion during peak usage periods and can be performed in response to information from server 1012. BQUICK ISP_A server 1012A employs monitoring tools or applications to continuously analyze traffic data to detect anomalies, troubleshoot network issues, and ensure compliance with service level agreements (SLAs) and regulatory requirements in some embodiments.

BQUICK_TOP server 1005 is a computing device similar to and is configured to communicate with servers 1012A and 1012B. BQUICK_TOP server 1005 includes software advantageously configured to address latency issues through network optimization, infrastructure upgrades, and efficient routing to ensure a reliable and responsive internet experience for their customers in some embodiments. BQUICK_TOP server 1005 can receive logs of network activity, including but not limited to traffic patterns, usage statistics, and security events from servers 1012A and 1012B in some embodiments. BQUICK_TOP server 1005 employs monitoring tools to continuously analyze traffic data to detect anomalies, troubleshoot network issues, and ensure compliance with service level agreements (SLAs) and regulatory requirements in some embodiments. In some embodiments, BQUICK_TOP server 1005 is a platform configured to perform latency monitoring in real time, latency analysis in real time, and latency optimization in real time. In some embodiments, the latency optimization is performed to provide a report indicating latency issues. BQUICK_TOP server 1005 can configure paths in networks 1002A and 1002B and controls devices in networks 1002A and 1002B so that low latency requirements are met in some embodiments.

BQUICK_TOP server 1005 and BQUICK ISP_B server 1012B are similar to BQUICK ISP_A server 1012A and is configured for operation with residences 1016B and 1018B. Residences 1016A, 1018A, 1016B and 1018B are similar to each other and can include similar devices. Residence 1018B includes a cable modem 1030B, a set top box 1036B, a game controller 1038, a television 1034 and a user device 1032. User device 1032 is similar to user device 1022. Head end 1008B is similar to head end 1008A, and ISP infrastructure 106B is similar to ISP infrastructure 1006A. Televisions 1024 and 1034 are monitors, smart televisions, or other audio/video equipment. Networks 1002A and 1002B can include cameras, security equipment, fire and safety equipment, smart appliances, etc. in communication with infrastructure 1006A and 106B in some embodiments. ISP infrastructure 1006A and 106B can each include fiber optic cable, coaxial cable, remote nodes, splitters, and other equipment for cable customers in some embodiments. The equipment can include amplifiers, remote physical devices or layers and remote media access control devices or layers. Intermediate nodes in ISP infrastructure 1006A and 106B can process data packets and monitor latency and traffic at various points in network. BQUICK_TOP server 1005, BQUICK ISP_B server 1012B, BQUICK_ISP_A server 1012A are controlled by ISPs (e.g., respective ISPs) in some embodiments.

ISP infrastructure 106B is coupled to residences 1016B and 1018B via a coaxial cable in some embodiments. Cable modem 1030B is a device configured to connect devices in residence 1018B to the ISP infrastructure 106B. Cable modem 1030 includes a computer, router, gateway, or other communication device in some embodiments. Modem 1030 can be configured to provide a wireless network for communicating with devices in residence 1018B. Repeaters, amplifiers, signal conditioners, etc. can be provided on the cable associated with modem 1030 in some embodiments. Cable modem refers to any device for communicating across a cable in some embodiments. Optical network unit 1020 and modem 1030 provide data connection to the ISPs data pipe over fiber or cable. All devices inside the home can be connected to the modem over Wi-Fi or Ethernet for internet connectivity. Each node (e.g., routers, repeaters, modems, Wi-Fi access points) inside the home can introduce latency. ONU 1020 and modem 1030 can be any device at a home or business that connects networking devices to ISPs provided internet data pipe over coaxial cable, fiber optic cable or digital subscriber line (DSL) or cell connection (e.g., via a tower (e.g., 5G, LTE modem)) in some embodiments.

Set top box 1036 is configured to receive and decode digital television signals for viewing on television 1034. Set top box 1036 can be configured for gaming operations and can communicate with a game controller 1038. Set top box 1036 can also be configured to provide internet access, shopping services, home automation, audio features, screen mirroring, etc. Set top box 1036 includes one or more processors, memory, dedicated graphics processing units (GPUs), and/or storage capacity for storing games, applications (apps), latency data, and recorded content in some embodiments. Set top box refers to any device that connects to a television set or monitor and allows users to receive and decode video signals. A set top box can serve as an interface between a television set and various broadcast media sources, such as cable, satellite, or internet-based streaming services in some embodiments. A dashed line in the drawings can represent a virtual connection and a solid line can represent a physical connection (e.g., wires or fiber optic cable).

The cloud infrastructure 1004, head end 1008A, and head end 1008B are in communication with the internet 1009 virtually or directly. Head end 1008A and head end 1008B can be associated with buildings 111A and 111B, respectively. Communication system 100 is generally an end-to-end combination of networking elements used for networking traffic from a home or business to internet 1009 (e.g., public internet) in some embodiments. In some embodiments, cloud infrastructure 1004 is a set multiple servers, switches, storage units. ISPs can have pool of data center/cloud servers co-located with head ends 1008A and 1008B or dedicated links to cloud infrastructure 1004 from head ends 1008A and 1008B and head end connections to internet 1009.

Although cloud infrastructure 1004 is shown as single block, cloud servers, data servers can be collocated with ISP head ends 1008A and/or 1008B. The cloud servers can be at third party private facility and ISPs can have dedicated physical links or links via internet 1009. Depending on congestion and server processing capabilities, cloud infrastructure 1004 can be a source of latency. Cloud server processing elements can be upgraded to support latency monitor applications (E.g., BQUICK applications) or can configure devices to support low latency services in some embodiments. Head ends 1008A and 1008B can be a central facility (e.g., a central office. A head end refers to a facility where internet data or audio/video content is received, processed, and routed to end subscribers like residential or business owners in some embodiments. Head ends 1008A and 1008B can have multiple switching, routing, data metering, queuing, security elements, and/or other devices which can introduce the latencies. Head ends 1008A and 1008B can also host Cable Modem Termination Systems (CMTS) in a cable network, DSLAM (Digital Subscriber Line Access Multiplexor) in a DSL network, and OLT (Optical Line Terminal) in a fiber network.

Networks 1002A and 1002B is operated by one of as ISP-A and ISP-B. ISPs extend their services to various residences or businesses within communities, cities, or specific regions. Networks 1002A and 1002B represents two distinct networks served by same or different ISPs, which may be situated in the same neighborhood or entirely different regions or countries. Homeowners or business proprietors seek out ISPs offering services in their local areas and subscribe to internet service accordingly.

### B. Applications

System 100 advantageously includes an ISP infrastructure BQUICK application 1056A for ISP infrastructure 1006A, a head end BQUICK application 1058A for head end 1008A, a modem BQUICK application 1020A for optical network unit 1020, a user device BQUICK application 1022A for user device 1022, and a television BQUICK application 1024A for television 1024. Applications 1056A, 1058A, 1020A, 1022A, and 1024A can be software apps or programs designed to perform specific tasks or provide particular functions as described herein (e.g., latency monitoring, latency analysis, and latency optimization and the communication and storage of data related thereto). Applications 1056A, 1058A, 1020A, 1022A, and 1024A can be provided on any electronic devices in communications system 100 including but not limited to servers, computers, smartphones, tablets, smart devices, appliances, cameras, security devices, vehicles, user devices, and other digital platforms. In some embodiments, applications 1056A, 1058A, 1020A, 1022A, and 1024A can be executed on Windows, macOS, iOS, Android, or other operating systems or can be web-based and accessible through internet browsers. In some embodiments, applications 1056A, 1058A, 1020A, 1022A, and 1024A can be cross-platform with an ability to be executed on multiple OS environments. Applications 1056A, 1058A, 1020A, 1022A, and 1024A can be installed from various sources such as app stores, software repositories, or directly from ISP's website. In some embodiments, applications 1056A, 1058A, 1020A, 1022A, and 1024A are configured to communicate with BQUICK_TOP server 1005 via a virtual connection. In some embodiments, applications 1056A, 1058A, 1020A, 1022A, and 1024A are configured to communicate with BQUICK_TOP server 1005 via BQUICK ISP_A server 1012A. Applications 1056A, 1058A, 1020A, 1022A, and 1024A can be updated through app stores or via automatic updates depending on device settings.

BQUICK applications 1056A, 1058A, 1020A, 1022A, and 1024A are configured to facilitate integration and communication with other services or platforms, sharing of data, collaboration, and/or access to additional functionalities seamlessly. Applications 1056A, 1058A, 1020A, 1022A, and 1024A allow optical network unit 1020, television 1024 and user device 1022 to monitor latency, store subscription information (e.g., classic bandwidth in Megabits per second (MPPS), monitor low latency bandwidth (MBPS), max jitter in milliseconds), and provide options for upgrading internet service. The latency information and subscription information can be tracked according to device, device type, user identification, application, residence identification, etc. in some embodiments. The latency information can be provided in a packet with a time stamp to BQUICK_TOP server 1005 in some embodiments. A user interface can be provided by applications 1056A, 1058A, 1020A, 1022A, and 1024A on optical network unit 1020, television 1024 and user device 1022 to upgrade or downgrade to a different level of service in light of latency information. The different level of service can be provided to latency server 150 and BQUICK_TOP server 1005, BQUICK ISP_A BQUICK server 1012A, or BQUICK ISP_B BQUICK server 1012B in some embodiments.

System 100 advantageously includes an ISP infrastructure BQUICK application 156B for ISP infrastructure 106B, a head end BQUICK application 1058B associated with head end 1008B, a modem BQUICK application 1030B for modem 1030, and a set top box BQUICK application 1036B for set top box. Applications 156B, 1058B, 1030B, and 1036B are similar to applications 1056A, 1058A, 1020A, 1022A, and 1024A. In some embodiments, when applications 1030B, 1036B, 1056A, 156B, 1058B, 1058A, 1020A, 1022A, and 1024A are installed or associated devices join the network, the applications 1030B, 1036B, 1056A, 156B, 1058B, 1058A, 1020A, 1022A, and 1024A register at server 1012 as being compliant for operations described herein. User device 1032, television 1034, and game controller 1038 can also include an application similar to BQUICK applications 1022A and 1024A.

In some embodiments, BQUICK applications 1030B, 1036B, 1056A, 156B, 1058B, 1058A, 10201020A, 1022A, and 1024A are latency applications and are configured to communicate data so that a topology report can be provided. The topology report identifies devices/networks from end-to-end. Latency requirements of each device is provided in the report (e.g., on a device by device, type of usage by type of usage, user ID by user ID, or application by application basis) in some embodiments. The report can be stored at \server 1012 in some embodiments. The latency requirements across the topology can be used to shape traffic, prioritize flow, etc. In some embodiments, the report tracks which devices are offline so that bandwidth reserved for those devices can be used for another device in some embodiments. In some embodiments, the report tracks whether the device is not running a low latency (e.g., BQUICK) application and yet is online so that bandwidth reserved for that device can be used for other devices in some embodiments. Offline refers to a state where a device, system, or application is not actively communicating with other devices or accessing online resources in some embodiments. A device that is off or asleep is offline in some embodiments. A low latency application can be offline when the low latency application is not running in some embodiments.

In some embodiments, the low latency packets are marked so that applications 1030B, and 1036B, 1056A, 156B, 1058B, 1058A, 1020A, 1022A, and 1024A can process the packets and flow as a low latency flow. In some embodiments, the end device (e.g., application 1024A) can send a command or request indicating that latency requirements are not being met and each application in the path (applications 1020A 1056A, and 1058A) can respond to that command to process the packets for that device at a higher priority or remove traffic from that path in some embodiments. Latency issues can be sourced from an AP, a mesh, a device, or a node. Tracking bit rates or latencies at each location allow solutions to be directed to the particular location of the latency issue.

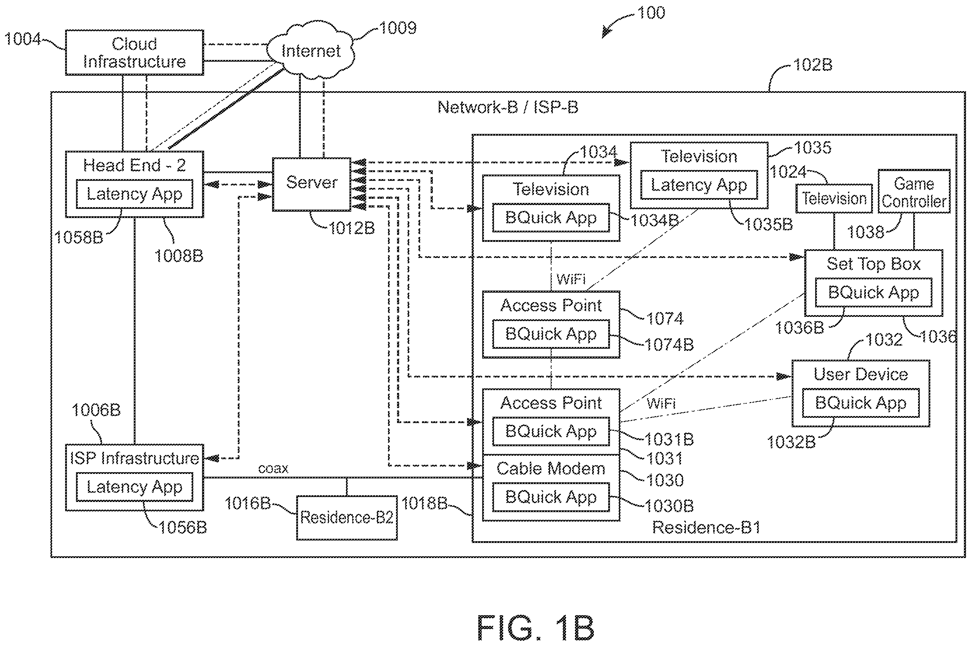

With reference to FIG. 1B, residence 1018B can include an access point 1031 in communication with modem 1030, a wireless router 1074 in communication with television 1034, a television 1035, set top box 1036, and user device 1032. Access point 1031 can be integrated with modem 1030 or can be a separate unit. User device 1032 includes a user device BQUICK application 1032B, and access point 1031 includes a latency access point application 1031B. Router 1074 includes a wireless router BQUICK application 1074B, television 1034 includes a television BQUICK application 1034B, and television 1035 includes a television BQUICK application 1035B. BQUICK_TOP server 1005, BQUICK_ ISP_A server 1012A, and BQUICK_ ISP_B server 1012B are in virtual communication with applications 1030B, 1031B, 1036B, 1074B 1032B, 1034B, 1035B, 156B, and 1058B in some embodiments. A server refers to any computing device that provides services or resources to other computers or clients within a network in some embodiments.

Applications 1030B, 1031B, 1036B, 1074B, 1032B, 1034B, 1035B, 156B, and 1058B are similar to applications 1056A, 1058A, 1020A, 1022A, and 1024A. Applications 1030B, 1031B, 1036B, 1074B, 1032B, 1034B, 1035B, 156B, and 1058B allow modem 1030, televisions 1034 and 1035, access point 1031, router 1074, set top box 1036, and user device 1032 as well as other cable modem termination systems to monitor latency, store subscription information (e.g., classic bandwidth in Megabits per second (MPPS), low latency bandwidth (MBPS), max jitter in milliseconds), and provide options for upgrading internet service. A user interface can be provided on optical network unit 1020, television 1024 and user device 1022 to upgrade or downgrade to a different level of service in light of latency information. This ability is available even if the devices are third party devices in some embodiments. In some embodiments, application 1031B or 1074B can be configured to update network topology information to BQUICK TOP server 1012, and applications 1030B, 1031B, 1036B, 1074B, 1032B, 1034B, 1035B, 156B, and 1058B can monitor low latency resources, request services, register devices, and request different latency treatment (e.g., for video, audio, commands, downloads, etc.). In some embodiments, devices or nodes associated with applications 1030B, 1031B, 1036B, 1074B 1032B, 1034B, 1035B, 156B, and 1058B can include algorithms for changing packet priority with time and latency requirements. Applications 1030B, 1031B, 1036B, 1074B, 1032B, 1034B, 1035B, 156B, and 1058B can communicate using virtual or logical connections (e.g., using internet 1009).

Access point 1031 is a networking device that allows Wi-Fi-enabled devices to connect to a wired network. Access point 1031 serves as a bridge between wireless devices, such as wireless router 1074, set top box 1036, user device 1032, televisions 1034 and 1035, and the wired network infrastructure, such as, modem 1030, routers, switches, and servers, in some embodiments. Wireless router 1074 can be a networking device that provides a wireless access point for a wireless network. Wireless router 1074 serves as a hub for a wireless local area network (LAN), allowing multiple devices in or around residence 1018B to connect to the internet and communicate with each other. Wireless router 1074 can include wirelessly built-in Ethernet switches which provide multiple ports for connecting wired devices. A wired connection can connect router 1074 to access point 1031 or modem 1030 in some embodiments. Wireless router refers to any device that provides a wireless access point for a wireless network in some embodiments.

With reference to FIGS. 1B-1C, applications 1030B and 1032B are in communication with BQUICK_TOP server 1005 via a logical interface. The architecture of applications 1030B and 1032B can be used in any of applications 1031B, 1036B, 1074B 1034B, 1035B, 156B, 1058B, 1056A, 1058A, 1020A, 1022A, and 1024A. The logical interface is a virtual interface that represents a specific network configuration or functionality within a networking device, such as modem 1030 or user device 1032. The logical interface is software defined and can be created, configured, and managed within the device's operating system in some embodiments. Applications 1030B and 1032B can be provided with modems, routers, access points, mesh devices, set top boxes, AR/VR devices, game consoles, phones, over the top devices (OTTs), etc. Applications 1030B, 1032B, and cloud infrastructure 1004 can communicate using app to app communication. App to app communication is an exchange of data, messages, or commands between two or more software applications running on the same device or different devices over a network in some embodiments. App to app communication enables seamless integration and collaboration between different apps, allowing them to share information, trigger actions, or synchronize state without requiring user intervention in some embodiments. BQUICK_TOP server 1012 can include an application for monitoring and/or determining end to end latency.

In some embodiments, applications 1020A, 1024A, 1032B, 1034B, 1035B, 1036B, and 1032B are client level applications. Applications 1036B can be configured for highest priority (e.g., lowest latency applications) while ordinary streaming latencies are associated with applications 1020A, 1024A, 1032B, 1034B, 1035B, 1032B. Applications 137A and 1031B are node level application and can be configured to provide or assign priority for applications 1020A, 1024A, 1032B, 1034B, 1035B, 1036B, and 1032B (client level applications) and associated devices. Application 1030B can be configured to provide or assign priority between application 1036B, applications 137A and 1031B (e.g., node level applications), and applications 1020A, 1024A, 1032B, 1034B, 1035B, and 1032B (e.g., client level applications) as well as their associated devices. Cloud level applications can include applications 156B and 1058B in some embodiments. In some embodiments, the partitioning of applications 156B, 1058B, 1020A, 1024A, 1030B, 1032B, 1034B, 1035B, 1036B, 137A, and 1032B allows for segregation of local and cloud processing, reduction in cloud server communication and ISP bandwidth, local data storage and security, availability of local resources (including edge processing and filtering of information), and faster response to low latency devices. In some embodiments, application 1030B has a server extension and handles communication between server 1012 and applications 1020A, 1024A, 1032B, 1034B, 1035B, 1036B, and 1032B.

When application 1030B includes the server extension, application 1030B can be a client level application or a cloud level application and maintain a virtual connection to server 1012 in some embodiments. The server extensions can provide advantages of decoupling development from ISPs which can be helpful for standardization, of having a direct data path from application 1020A or 1031B to app developer servers, of maintaining local data privacy, of availability of local resources (e.g., local machine learning (ML), edge processing and filtering information), and of faster response to local low latency gadgets or devices in some embodiments.

In some embodiments, applications 156B, 1058B, 1020A, 1024A, 1030B, 1032B, 1034B, 1035B, 1036B, 137A, and 1032B can achieve synchronization of the wall clock across all nodes and end user devices. Applications 156B, 1058B, 1020A, 1024A, 1030B, 1032B, 1034B, 1035B, 1036B, 137A, and 1032B utilize timestamps for low-latency data packets at each node. This enhancement enables the determination of latency at each node and reporting to server 1012 in some embodiments. By utilizing a precision time protocol (PTP), applications 156B, 1058B, 1020A, 1024A, 1030B, 1032B, 1034B, 1035B, 1036B, 137A, and 1032B can distinguish whether latency arises from the home network, an ISP, or cloud servers using time stamps in some embodiments. Each device can have an associated PTP clock that communicates with the application associated with the device. The latency per node can be shared across networks so that networks can avoid devices having latency issues or can perform other operations to reduce latency at that node (e.g., divert higher latency traffic away from the node having issues). The PTP clock can be derived form a satellite clock in some embodiments.

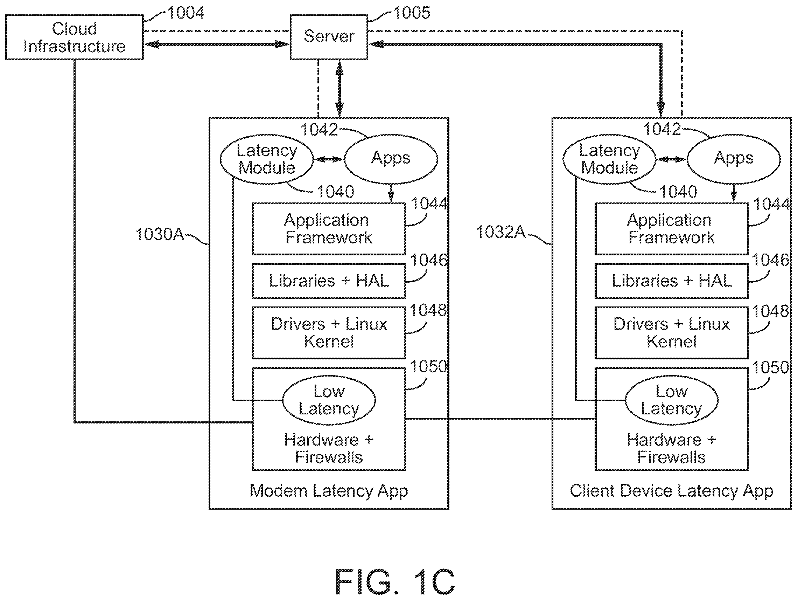

With reference to FIG. 1C, applications 1030B and 1032B each include a latency module 1040, applications 1042, an application framework 1044, libraries and hardware abstraction layer 1046, drivers and linux kernel 1048, and hardware and firewalls 1050. In some embodiments, latency module 1040 is configured to control and monitor hardware and firewalls based upon latency. Latency module or BQUICK module 1040 is software configured to provide the low latency operations described herein. Applications 1042 are apps for performing various operations and can include third part apps (e.g., android package kit (APK)). Application framework 1044 is a structured set of software components that provide the necessary infrastructure for building and running applications.

Libraries and hardware abstraction layer 1046 provides standardized interfaces for device drivers to interact with hardware components. Libraries and hardware abstraction layer 1046 allows applications and system services to access hardware functionalities in a consistent manner across different devices. Libraries and hardware abstraction layer 1046 provide collections of pre-written code that developers can use to perform common tasks or implement specific functionalities and generally contain reusable functions, classes, or modules that provide specific capabilities.

Drivers and Linux kernel 1048 serves as the bridge between the hardware and the software layers of the system, managing system resources in some embodiments. Drivers and Linux kernel 1048 provide essential services and facilitate communication between software processes and hardware devices in some embodiments. Drivers and Linux kernel 1048 includes software components that facilitate communication between the operating system (OS) and hardware devices in some embodiments.

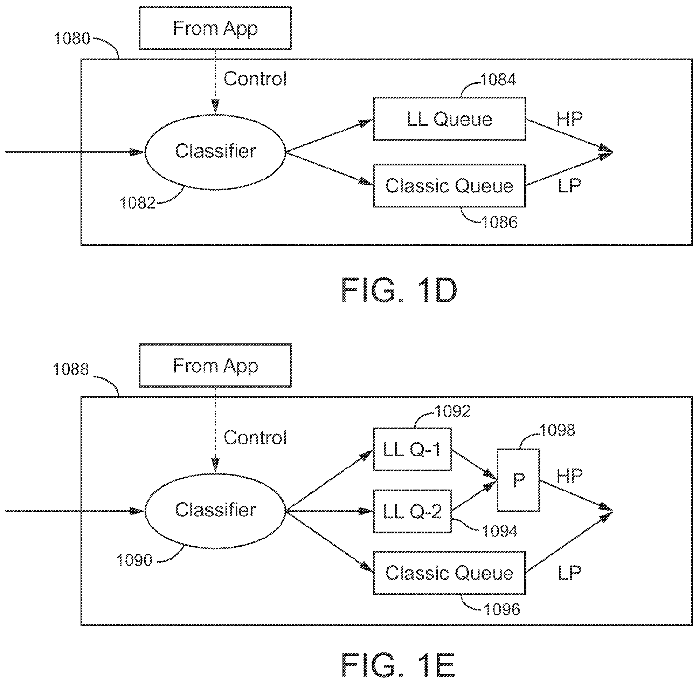

With reference to FIG. 1D, a function, service, process, or operation 1080 can controlled by any of applications 1030B, 1031B, 1036B, 1074B, 1032B, 1034B, 1035B, 156B, 1058B, 1056A, 1058A, 1020A, 1022A, and 1024A (FIGS. 1A and 1B). Operation 1080 use a classifier 1082, a low latency queue 1084, and a classic queue 1086. Queues 1084 and 1086 are memory or data structures used to manage the flow of packets or messages within a network device or system 100 (FIG. 1A). Queue 1084 is associated with a high-performance path, and queue 1086 is associated with a low performance path in some embodiments. A queue refers to any structure for storing information (e.g., packets) in some embodiments. Any networking device can have separate queue to support low latency traffic and operation can be performed any device in communication system 100 (FIG. 1A). Applications 1030B, 1031B, 1036B, 1074B, 1032B, 1034B, 1035B, 156B, 1058B, 1056A, 1058A, 1020A, 1022A, and 1024A can report latency for each queue independently.

Queues 1084 and 1086 are configured as first-in-first-out (FIFO) buffers that temporarily hold packets or messages before messages are transmitted or processed in some embodiments. Queue 1084 can store messages for the high-performance path (e.g., low latency path), and queue 1086 can store messages for the low performance path (e.g., high latency path) in some embodiments. In some embodiments, a low latency operations may use a low performance path, and a high latency operations may use the high performance path, or each uses the same path. A path refers to any communication route or channel through which data or information travels from a source to a destination (e.g., through devices and across mediums) in some embodiments. A path can include intermediate components and links involved in transmitting data between two or more points in one or more networks in some embodiments. A low latency path refers to a path for low latency traffic in some embodiments.

Classifier 1082 is processor and/or software configured to categorize or classify network traffic based on certain criteria (e.g., by latency requirements and/or priority). Classifier 1082 is configured to enforce network policies, prioritize traffic (e.g., for the high performance or low performance path), and/or apply specific actions based on the classification results in some embodiments. Classifier 1082 is used to differentiate between different classes of traffic (e.g., voice, video, data) and apply QoS policies to ensure that critical applications receive adequate bandwidth and latency requirements. Classifier 1082 prioritizes traffic based on predefined criteria, ensuring that important or time-sensitive applications receive preferential treatment over less critical traffic by appropriately providing traffic to queue 1084 and queue 1086. Classifier 1082 can utilize information about customer subscriptions (e.g., device level, user level, residence level) to classify traffic in some embodiments.

With reference to FIG. 1E, an operation 1088 can be controlled by any of applications 1030B, 1031B, 1036B, 1074B, 1032B, 1034B, 1035B, 156B, 1058B, 1056A, 1058A, 1020A, 1022A, and 1024A. Operation 1088 is similar to operation 1080 and utilizes a classifier 1090, a first low latency queue 1092, a second latency latency queue 1094, a classic queue 1096, and a priority queue 510. Queues 1092, 1094, 1096 and 1098 are memory or data structures used to manage the flow of packets or messages within a network device or system 100 (Fig. 1A). Queues 1092 and 1094 are associated with a high performance path, and queue 1096 is associated with a low performance path in some embodiments. Queue 1098 receives messages from queues 1092 and 1094 and provide messages or data to the high performance path based upon a priority scheme associated with queues 1092 and 1094 in some embodiments. Classifier 1090 is similar to classifier 1082 and is configured to categorize or classifying network traffic based on certain criteria (e.g., by latency requirements) for queues 1092, 1094, and 1096 in some embodiments. In some embodiments, classifiers 1082 and 1090 are software modules operating on a device (e.g., server, ISP supplied device, user device, etc.). In some embodiments, queues 1084, 1086, 1092, 1094, 1096 and 1098 are virtual queues provided on the memory of the device configured by operation 1080 or 1088. In some embodiments, queues 1084, 1086, 1092, 1094, 1096 and 1098 are dedicated hardware queues (e.g., FIFO memories) on the device. Classifiers 1090 and 1082 and queues 1084, 1086, 1092, 1094, 1096 and 1098 are implemented in an application layer of the device and may utilize services and structures provided by the media access layer and the physical layer in some embodiments. Classifiers 1082 and 1090 can be configured by commands provided by BUICK TOP server 1012 to appropriately classify low latency traffic in some embodiments.

In some embodiments, applications 1080 and 1088 are configured to operate at nodes associated with devices including but not limited to ONU 1020, modem 1030, set top box 1036, television 1024, access point 1031, user device 1032, and/or router 1074. Applications 1080 and 1088 are configured to control and/or partition subscribed low latency bandwidth traffic (e.g., 20 Mbps vs 50 Mbps), track latency statistics (e.g., minimum, maximum, average latencies for low latency flows), process five tuples (e.g., source IP address, source port, destination IP address, destination port, transport protocol) for X number of flows (where X is any integer) with latency and/or bandwidth requirements, monitor latency introduced by a node, provide timestamps at ingress and egress ports, monitor buffer depths, perform boundary clock precision protocol (e.g., IEEE 10588-2008 standard and extensions thereof), and prioritize of traffic among multiple low latency clients. Monitored and measured information can be appended to packets for provision to other nodes and servers (e.g., server 1012). For example, time stamps can be applied to packets at each node or device. Latency can be determined by comparing time stamps. Applications 1080 and 1088 are also configured to track status of low latency applications and provide a user interface for controlling low latency configurations in some embodiments. Classifiers 1082 and 1090 and/or queues 1084, 1086, 1092, 1094, 1096 are configured by applications 1030B, 1031B, 1036B, 1074B, 1032B, 1034B, 1035B, 156B, 1058B, 1056A, 1058A, 1020A, 1022A, and 1024A (e.g., at each respective node) in some embodiments. In some embodiments, servers 1012, 1012A, and 1012B configure classifiers 1082 and 1090 and/or queues 1084, 1086, 1092, 1094, 1096 via virtual connections.

Applications 1080 and 1088 can identify end to end bandwidth available for low latency applications, provide a user real time feedback of monitored latency, and adjust latency responses. The adjustment may be in response to purchased services or bandwidth upgrades in some embodiments. In some embodiments, applications 1080 and 1088 can be configured to provide an advertisement or customer offer for low latency resources. Applications 1080 and 1088 can address variable latency for each user and adjust response for the latency level at a particular time, for a particular time period, etc. Latency information can be communicated to servers 1012A, 1012B, and 1012 and applications 1030B, 1031B, 1036B, 1074B, 1032B, 1034B, 1035B, 156B, 1058B, 1056A, 1058A, 1020A, 1022A, and 1024A as timestamps appended to packets as described herein, or to a packet identifier (e.g. 5 tuples and sequence number) in some embodiments. The time stamp information can be sent to servers 1012A, 1012B, and/or 1012 via an independent virtual/logical channel in some embodiments.

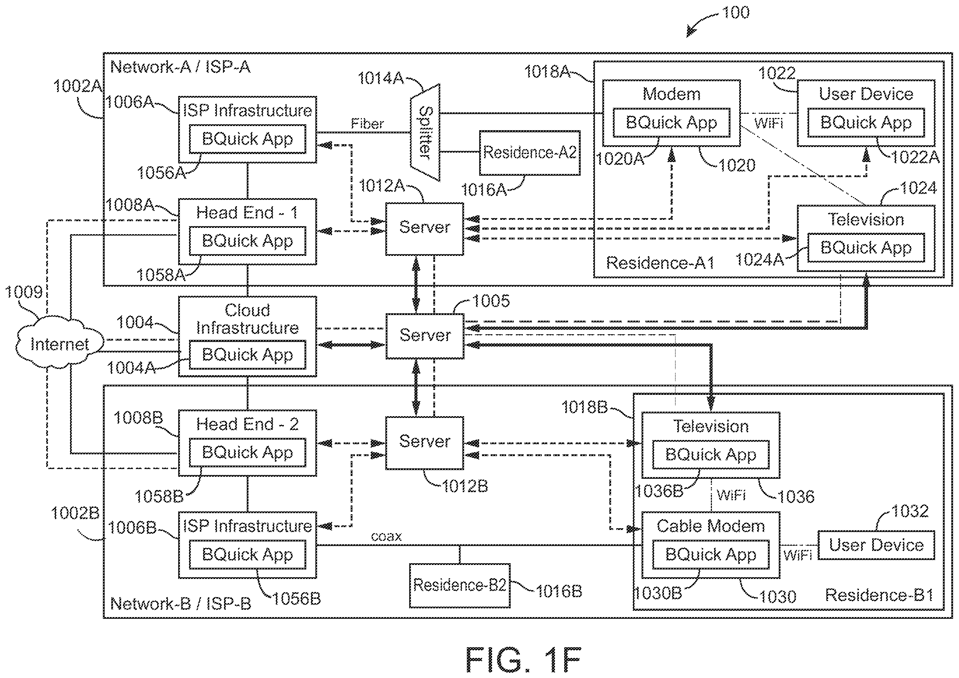

With reference to FIG. 1F, cloud infrastructure 1004 can include an application 1004A. Application 1004A is similar to applications 1030B, 1031B, 1036B, 1074B 1032B, 1034B, 1035B, 156B, and 1058B. BQUICK TOP server 1012 can be configured to monitor AR/VR applications and/or metaverse applications. An application executed on BQUICK TOP server 1012 can perform the monitoring functions. Application 1004A is in communication with BQUICK TOP server 1012. Servers 1012A and 1012B can include an application similar to application 1004A.

Using applications, 1020A, 1024A, 1030B, 1032B, 1034B, 1035B, 1036B, 137A, and 1032B, the devices given by ISPs, customer-owned AR/VR setups, mobile phones, over the top (OTT) devices, and cloud gaming clients are capable of facilitating low latency uses. Applications, 1020A, 1024A, 1030B, 1032B, 1034B, 1035B, 1036B, 137A, and 1032B allow devices in residences 1018A and 1018B to interact with the server extension integrated in the ONU 1020 and modems 1030 or routers (e.g., ISP provided). Additionally, the server extensions have the ability to filter and transmit all necessary information to servers 1012A and 1012B or share open data with application developers.

### C. Computing Environment

Prior to discussing the specifics of embodiments of the systems and methods of the present solution, it may be helpful to discuss the computing environments in which such embodiments may be deployed.

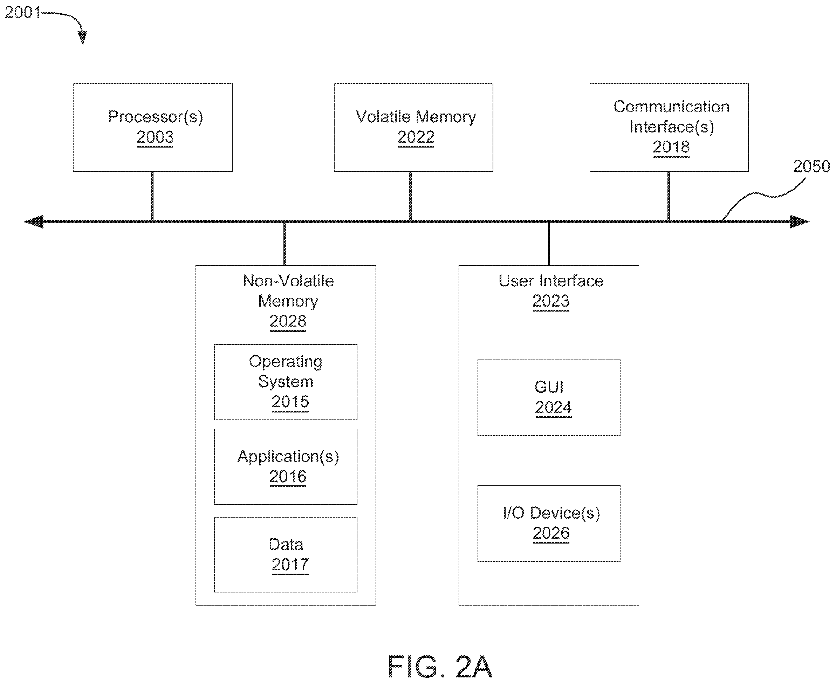

As shown in FIG. 2A, computer 2001 may include one or more processors 2003, volatile memory 2022 (e.g., random access memory (RAM)), non-volatile memory 2028 (e.g., one or more hard disk drives (HDDs) or other magnetic or optical storage media, one or more solid state drives (SSDs) such as a flash drive or other solid state storage media, one or more hybrid magnetic and solid state drives, and/or one or more virtual storage volumes, such as a cloud storage, or a combination of such physical storage volumes and virtual storage volumes or arrays thereof), user interface (UI) 2023, one or more communications interfaces 2018, and communication bus 2050. User interface 2023 may include graphical user interface (GUI) 2024 (e.g., a touchscreen, a display, etc.) and one or more input/output (I/O) devices 2026 (e.g., a mouse, a keyboard, a microphone, one or more speakers, one or more cameras, one or more biometric scanners, one or more environmental sensors, one or more accelerometers, etc.). Non-volatile memory 2028 stores operating system 2015, one or more applications 2016, and data 2017 such that, for example, computer instructions of operating system 2015 and/or applications 2016 are executed by processor(s) 2003 out of volatile memory 2022. In some embodiments, volatile memory 2022 may include one or more types of RAM and/or a cache memory that may offer a faster response time than a main memory. Data may be entered using an input device of GUI 2024 or received from I/O device(s) 2026. Various elements of computer 2001 may communicate via one or more communication buses, shown as communication bus 2050.

Computer 2001 as shown in FIG. 2A is shown merely as an example, as clients, servers, intermediary and other networking devices and may be implemented by any computing or processing environment and with any type of machine or set of machines that may have suitable hardware and/or software capable of operating as described herein. Processor(s) 2003 may be implemented by one or more programmable processors to execute one or more executable instructions, such as a computer program, to perform the functions of the system. As used herein, the term "processor" describes circuitry that performs a function, an operation, or a sequence of operations. The function, operation, or sequence of operations may be hard coded into the circuitry or soft coded by way of instructions held in a memory device and executed by the circuitry. A "processor" may perform the function, operation, or sequence of operations using digital values and/or using analog signals. In some embodiments, the "processor" can be embodied in one or more application specific integrated circuits (ASICs), microprocessors, digital signal processors (DSPs), graphics processing units (GPUs), microcontrollers, field programmable gate arrays (FPGAs), programmable logic arrays (PLAs), multi-core processors, or general-purpose computers with associated memory. The "processor" may be analog, digital or mixed-signal. In some embodiments, the "processor" may be one or more physical processors or one or more "virtual" (e.g., remotely located or "cloud") processors. A processor including multiple processor cores and/or multiple processors multiple processors may provide functionality for parallel, simultaneous execution of instructions or for parallel, simultaneous execution of one instruction on more than one piece of data.

Communications interfaces 2018 may include one or more interfaces to enable computer 2001 to access a computer network such as a Local Area Network (LAN), a Wide Area Network (WAN), a Personal Area Network (PAN), or the Internet through a variety of wired and/or wireless or cellular connections.

In some implementations, the computing device 2001 may execute an application on behalf of a user of a client computing device. For example, the computing device 2001 may execute a virtual machine, which provides an execution session within which applications execute on behalf of a user or a client computing device, such as a hosted desktop session. The computing device 2001 may also execute a terminal services session to provide a hosted desktop environment. The computing device 2001 may provide access to a computing environment including one or more of: one or more applications, one or more desktop applications, and one or more desktop sessions in which one or more applications may execute.

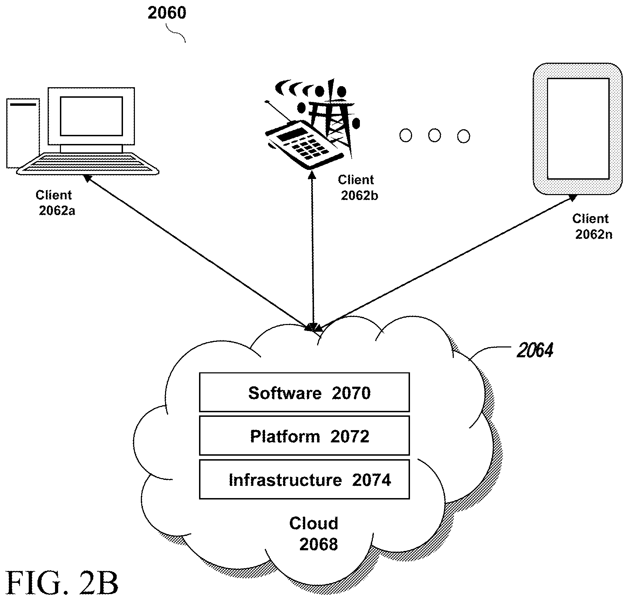

Referring to FIG. 2B, a computing environment 2060 is depicted. Computing environment 2060 may generally be considered implemented as a cloud computing environment, an on-premises ("on-prem") computing environment, or a hybrid computing environment including one or more on-prem computing environments and one or more cloud computing environments. When implemented as a cloud computing environment, also referred as a cloud environment, cloud computing or cloud network, computing environment 2060 can provide the delivery of shared services (e.g., computer services) and shared resources (e.g., computer resources) to multiple users. For example, the computing environment 2060 can include an environment or system for providing or delivering access to a plurality of shared services and resources to a plurality of users through the internet. The shared resources and services can include, but not limited to, networks, network bandwidth, servers, processing, memory, storage, applications, virtual machines, databases, software, hardware, analytics, and intelligence.

In embodiments, the computing environment 2060 may provide client 2062 with one or more resources provided by a network environment. The computing environment 2062 may include one or more clients 2062a-2062n, in communication with a cloud 2068 over one or more networks 2064. Clients 2062 may include, e.g., thick clients, thin clients, and zero clients. The cloud 108 may include back-end platforms, e.g., servers 106, storage, server farms or data centers. The clients 2062 can be the same as or substantially similar to computer 2001 of FIG. 2A.

The users or clients 2062 can correspond to a single organization or multiple organizations. For example, the computing environment 2060 can include a private cloud serving a single organization (e.g., enterprise cloud). The computing environment 2060 can include a community cloud or public cloud serving multiple organizations. In embodiments, the computing environment 2060 can include a hybrid cloud that is a combination of a public cloud and a private cloud. For example, the cloud 108 may be public, private, or hybrid. Public clouds 108 may include public servers that are maintained by third parties to the clients 2062 or the owners of the clients 2062. The servers may be located off-site in remote geographical locations as disclosed above or otherwise. Public clouds 2068 may be connected to the servers over a public network 2064. Private clouds 2068 may include private servers that are physically maintained by clients 2062 or owners of clients 2062. Private clouds 2068 may be connected to the servers over a private network 2064. Hybrid clouds 2068 may include both the private and public networks 2064 and servers.

The cloud 2068 may include back-end platforms, e.g., servers, storage, server farms or data centers. For example, the cloud 2068 can include or correspond to a server or system remote from one or more clients 2062 to provide third party control over a pool of shared services and resources. The computing environment 2060 can provide resource pooling to serve multiple users via clients 2062 through a multi-tenant environment or multi-tenant model with different physical and virtual resources dynamically assigned and reassigned responsive to different demands within the respective environment. The multi-tenant environment can include a system or architecture that can provide a single instance of software, an application or a software application to serve multiple users. In embodiments, the computing environment 2060 can provide on-demand self-service to unilaterally provision computing capabilities (e.g., server time, network storage) across a network for multiple clients 2062. The computing environment 2060 can provide an elasticity to dynamically scale out or scale in responsive to different demands from one or more clients 2062. In some embodiments, the computing environment 2060 can include or provide monitoring services to monitor, control and/or generate reports corresponding to the provided shared services and resources.

In some embodiments, the computing environment 2060 can include and provide different types of cloud computing services. For example, the computing environment 2060 can include Infrastructure as a service (IaaS). The computing environment 2060 can include Platform as a service (PaaS). The computing environment 2060 can include serverless computing. The computing environment 2060 can include Software as a service (SaaS). For example, the cloud 2068 may also include a cloud-based delivery, e.g., Software as a Service (SaaS) 2070, Platform as a Service (PaaS) 2072, and Infrastructure as a Service (IaaS) 2074. IaaS may refer to a user renting the use of infrastructure resources that are needed during a specified time period. IaaS providers may offer storage, networking, servers or virtualization resources from large pools, allowing the users to quickly scale up by accessing more resources as needed. Examples of IaaS include AMAZON WEB SERVICES provided by Amazon.com, Inc., of Seattle, Washington, RACKSPACE CLOUD provided by Rackspace US, Inc., of San Antonio, Texas, Google Compute Engine provided by Google Inc. of Mountain View, California, or RIGHTSCALE provided by Right Scale, Inc., of Santa Barbara, California. PaaS providers may offer functionality provided by IaaS, including, e.g., storage, networking, servers or virtualization, as well as additional resources such as, e.g., the operating system, middleware, or runtime resources. Examples of PaaS include WINDOWS AZURE provided by Microsoft Corporation of Redmond, Washington, Google App Engine provided by Google Inc., and HEROKU provided by Heroku, Inc. of San Francisco, California. SaaS providers may offer the resources that PaaS provides, including storage, networking, servers, virtualization, operating system, middleware, or runtime resources. In some embodiments, SaaS providers may offer additional resources including, e.g., data and application resources. Examples of SaaS include GOOGLE APPS provided by Google Inc., SALESFORCE provided by Salesforce.com Inc. of San Francisco, California, or OFFICE 365 provided by Microsoft Corporation. Examples of SaaS may also include data storage providers, e.g., DROPBOX provided by Dropbox, Inc. of San Francisco, California, Microsoft SKYDRIVE provided by Microsoft Corporation, Google Drive provided by Google Inc., or Apple ICLOUD provided by Apple Inc. of Cupertino, California.

Clients 2062 may access IaaS resources with one or more IaaS standards, including, e.g., Amazon Elastic Compute Cloud (EC2), Open Cloud Computing Interface (OCCI), Cloud Infrastructure Management Interface (CIMI), or OpenStack standards. Some IaaS standards may allow clients access to resources over HTTP and may use Representational State Transfer (REST) protocol or Simple Object Access Protocol (SOAP). Clients 2062 may access PaaS resources with different PaaS interfaces. Some PaaS interfaces use HTTP packages, standard Java APIs, Java Mail API, Java Data Objects (JDO), Java Persistence API (JPA), Python APIs, web integration APIs for different programming languages including, e.g., Rack for Ruby, WSGI for Python, or PSGI for Perl, or other APIs that may be built on REST, HTTP, XML, or other protocols. Clients 2062 may access SaaS resources through the use of web-based user interfaces, provided by a web browser (e.g., GOOGLE CHROME, Microsoft INTERNET EXPLORER, or Mozilla Firefox provided by Mozilla Foundation of Mountain View, California). Clients 2062 may also access SaaS resources through smartphone or tablet applications, including, e.g., Salesforce Sales Cloud, or Google Drive app. Clients 2062 may also access SaaS resources through the client operating system, including, e.g., Windows file system for DROPBOX.

In some embodiments, access to IaaS, PaaS, or SaaS resources may be authenticated. For example, a server or authentication server may authenticate a user via security certificates, HTTPS, or API keys. API keys may include various encryption standards such as, e.g., Advanced Encryption Standard (AES). Data resources may be sent over Transport Layer Security (TLS) or Secure Sockets Layer (SSL).

Although examples of communications systems described above may include devices operating according to an Ethernet and other standards, it should be understood that embodiments of the systems and methods described can operate according to alternative standards and use wireless communications devices other than devices configured as devices. For example, multiple-unit communication interfaces associated with cellular networks, satellite communications, vehicle communication networks, wired networks, and networks can utilize the systems and methods described herein without departing from the scope of the systems and methods described herein.

### D. Offloading Network Processing

Disclosed herein are systems and methods of offloading network processing. For example, a client device can coordinate with a gateway to convey data from a buffer to the gateway. For example, the client device can establish a pipe with the server and push socket buffer data to a local memory of the gateway via the pipe. The client device can establish another link with a server hosting a resource available to the client device, via the gateway (e.g., the link can traverse the gateway between a network of the client device and another network of the server). For example, the link can be a transport level link such as a TCP/UDP link, wherein the gateway is one of an access point or a cable modem. The gateway can detect a packet lost between the client device and the server and cause a retransmission of the lost packet. The retransmission can include or omit various adjustments to the lost packet, such as the header data of the lost packet. For example, the gateway can model a stack corresponding to the link between the client device and the server, the stack configured to adjust header bits to indicate the retransmitted packet as a retransmission, as originated by one of the client device or the server.

For clarity of the disclosure, before proceeding with further description of the systems and methods provided herein, illustrative descriptions of various terms are provided:

A client device may refer to or include a device to consume services provided by a network, such as data exchange, internet access, or file sharing, in some embodiments. For example, in the context of a wireless fidelity (Wi-Fi) network, a client device can include various non-AP STA devices such as mobile phones, tablets, laptop or desktop computers or internet of things (IOT) devices. In some embodiments, a client device can include a television 1024 or other user device 1022 in a residence 1002 or other location. Some client devices may be power constrained devices (e.g., battery powered devices) configured to enter a sleep state to reduce energy usage. Communication with such devices may incur additional latency. A client device (or a server) may also be referred to as an endpoint device, without limiting effect.

An "access point" (AP) may refer to a device for communicatively coupling one or more "non-AP" devices (e.g., a client device) to a network, in some embodiments. More specifically, an AP may enable non-AP devices to connect and communicate with a network. In some embodiments, an AP may be a "wireless access point" (WAP) configured to enable wireless communication between non-AP devices. An AP includes but is not limited to a mobile, portable, or fixed hot spot, router, bridge, or other communication device.

A modulator-demodulator (modem) may refer to or include a communication device that converts digital data generated by a computer or other digital device into an analog signal suitable for transmission over analog communication lines, such as telephone lines or cable networks, and vice versa, in some embodiments. Modems can include standalone devices or be integrated into other devices, such as routers or computers, and can be used to connect digital devices to the Internet through telephone lines, cable systems, or satellite links. For example, a modem can include a cable modem configured to communicate between an Ethernet network and a Hybrid Fiber-Coaxial (HFC) network.

Either of an AP or a modem (or a combination including at least one of an AP or a modem) may be referred to as a network gateway device, network device or gateway device. Further, network gateway devices can include firewalls, routers, switches, bridges, and so on. In some embodiments, one or more network gateway devices can define an edge of a network to couple one or more devices of a first network with one or more devices of a second network. Offloading may refer to or include implementing a function on a second device or process to obviate a function which may be otherwise performed by a first device or process, in some embodiments. For example, implementing or modeling a network stack at a second device can obviate stack implementation or packet handling according to the network stack at the first device. Such offloading can aid latency, redundancy, energy usage, compute availability, etc.

A server may refer to or include a computing system to provide resources, data, services, or programs to other computers (e.g., client devices), according to some embodiments. For example, the server can be a latency server (e.g., a BQUICK_TOP server 1005) in some embodiments. For example, a server can communicate with various client devices disposed on various networks (e.g., local networks). A server can communicate with the client devices via any number of further devices, such as other servers. For example, a server can connect through a content delivery network (CDN) device, an internet service provider, or a peering arrangement with other networks to distribute resources to client devices.

Wireless communication may refer to or include the transfer of information between two or more devices that are not physically connected by an electrical conductor, in some embodiments. It can involve the use of electromagnetic waves, such as radio frequencies, infrared, and microwaves, to transmit data through the air, allowing devices to communicate over without wires, cables, or other physical connections. For example, Wi-Fi is a technology that allows electronic devices to connect to a wireless local area network (WLAN), typically using, for example, 2.4 GHz, 5 GHz, or 6 GHz radio bands.

A pipe may refer to or include a logical conduit through which data is transferred between different computers over a network (e.g., a wireless network). A pipe can be implemented at various levels of an Open Systems Interconnection (OSI) model. For example, a pipe implemented at a data link layer can refer to or include a data transmission pathway that operates at the MAC addressing level, facilitating the transfer of frames between devices based on their MAC addresses, in some embodiments. A pipe implemented at a transport layer can include a User Datagram Protocol (UDP), Transmission Control Protocol (TCP), or other pipe. A pipe may be implemented using buffers and operating system application programming (API) calls to share, transfer or communicate data from one or more buffers on one device to one or more buffers on another device. An application may refer to or include a process operating at a layer above the data link or transport layer, in some embodiments. The layers below the application may implement various support structures, abstractions, or services to the application layer. Various implementations of the lower layers may be transparent to the application layer. Transparency may refer to or include changes to a lower layer which do not change a behavior of the application layer, in some embodiments. For example, a shared memory space may remain the same for various transport layer or data link connection implementations. The behavior may refer to an interface with the application; the changes may impact a latency of communication with the application layer.

A residential computing environment may refer to or include the network, devices, systems, services, applications and software found within a household or living space that support personal and recreational computing activities, in some embodiments. For example, many residential computing environments can include a single link to the internet via a digital subscriber line (DSL), HFC, fiber optic, satellite, mobile broadband, or other communications link. The connection can be via an Internet Service Provider (ISP).

An Internet Service Provider (ISP) may refer to or include network infrastructure systems that include networking hardware, servers, systems, applications, and software to route and manage Internet traffic, in some embodiments. They can connect to larger ISPs or directly to Internet Exchange Points (IXPs), where different networks meet to exchange traffic. For example, the network infrastructure of an ISP can include a cable modem termination service (CMTS) to connect various cable modems (e.g., modem 1020), or other network interface devices to couple with other communication links.

A network layer (e.g., Internet Protocol, IP) can overlay a data link layer. A transport layer, in turn, can overlay the network layer. The transport layer can refer to or include a layer to implement functions such as end-to-end communication control, segmentation and reassembly of data, flow control, error control, and connection management, in some embodiments. Protocols within the transport layer can include TCP (Transmission Control Protocol) and UDP (User Datagram Protocol), to manage the delivery of data segments between correct application processes, using port numbers to distinguish between different processes on the devices. A transport layer connection may refer to or include a logical association established between two endpoints on a network to facilitate the transfer of data. This connection can employ the TCP or UDP for transmissions. In the case of TCP, the connection encompasses mechanisms for establishing a session through a handshake process, segmenting application data into manageable packets, ensuring reliable and ordered delivery of these packets, handling flow control to prevent network congestion, and providing error checking and correction. For UDP, the connection can omit some portions of the TCP to send datagrams without establishing a session or guaranteeing delivery.

A network stack may refer to or include a set of components (e.g., software components, processes, drivers, buffers, files, memory, etc.) that implement the various protocols used to facilitate network communications and data exchange over a network, in some embodiments. These components can be organized in a hierarchical manner, reflecting the layered architecture of networking models such as the OSI (Open Systems Interconnection) model. For example, the layers can include a data link layer, having a MAC sublayer disposed over a physical layer. The MAC layer may refer to or include the sublayer of the Data Link Layer that is responsible for controlling how devices on a network uniquely identify themselves and access the physical medium to transmit data, in some embodiments. It can include frame encapsulation and the arbitration of access to shared media.

A transport layer stack may refer to or include the set of components for a transport layer protocol, in some embodiments (e.g., TCP/UDP). Modeling a transport layer stack may refer to or include establishing a network stack that implements functionalities of the transport layer, in some embodiments, specifically tailored to specific constraints without fully adhering to the full specifications of standard protocols like TCP or UDP or without establishing a full stack. For example, the modeled transport layer stack can include simplified mechanisms for data segmentation and reassembly, basic error detection and correction, or a subset of flow control/congestion avoidance operations. The modeled stack might also incorporate custom lightweight versions of standard protocols, designed to operate transparently with other endpoints, such as to cause a retransmission of lost packets.

A loss of a packet may refer to or include a detection of an outbound packet that is not received by a destination, or a detection of an absence of an inbound packet, in some embodiments. For example, packet loss can be detected according to a sequence number, a lack of an acknowledgement (ACK), a receipt of a non-acknowledgement (NACK), etc. The indication can be received according to any layer of an OSI model. For example, the detection may be at the transport layer, a layer above the transport layer (e.g., from the application layer based on application data), or a layer below the transport layer.

A socket may refer to or include an endpoint for sending or receiving data across a network between two computing devices, in some embodiments. A socket may refer to and include a software construct to interface with transport layer protocols or network layer protocols for communicating data between devices. A socket can be identified by an internet protocol (IP) address and a port number. A socket buffer ("sockbuf") may refer to or include a reserved area of memory allocated for storing incoming or outgoing network data associated with a socket, in some embodiments. The socket buffer can temporarily hold data transmitted or received.

Re-transmission may refer to or include a transmission of a packet having a same payload as a packet which is detected as lost, dropped or otherwise not received according to some embodiments. The re-transmission can be performed by a same device as an original transmission, or another device. The packet prepared for transmission can be a bitwise equivalent of a lost packet, or can include adjustments to, for example, a sequence number, timestamp, or header information, along with an error correction code, to correspond to any other adjustments.

Encryption may refer to or include a conversion from a plaintext input into a ciphertext output using an algorithm and a key, in some embodiments. For example, according to a Transport Layer Security algorithm (TLS) encryption can secure data exchanged between a client device and a server. Decryption may refer to or include a conversion from a ciphertext input into a plaintext output using an algorithm and a key, in some embodiments. The key can be a same key as for the encryption according to a symmetric algorithm, or vary therefrom according to an asymmetric algorithm (e.g., a public-private key pair). Unless otherwise specified, references to keys can refer to either of a symmetric or asymmetric key. For asymmetric keys, a possession of a key can refer to either of a public key or corresponding private key.

Encryption or decryption can be performed by one or more devices in possession of a key. For example, in some embodiments, a client device and a network gateway device can both possess a key to encrypt or decrypt a payload for provision to, or receipt from, a server. In some embodiments, a client device can include a key and the and a network gateway device can lack the key (e.g., the network gateway device can re-transmit packets for which it cannot access at least a payload thereof). In some embodiments, a network gateway can include a key and the and the client device can lack the key. For example, the client device can maintain a plain text link with the gateway (e.g., HTTP), whereupon the gateway can encrypt the channel to form a cipher text link (e.g., an HTTPS connection with the server).

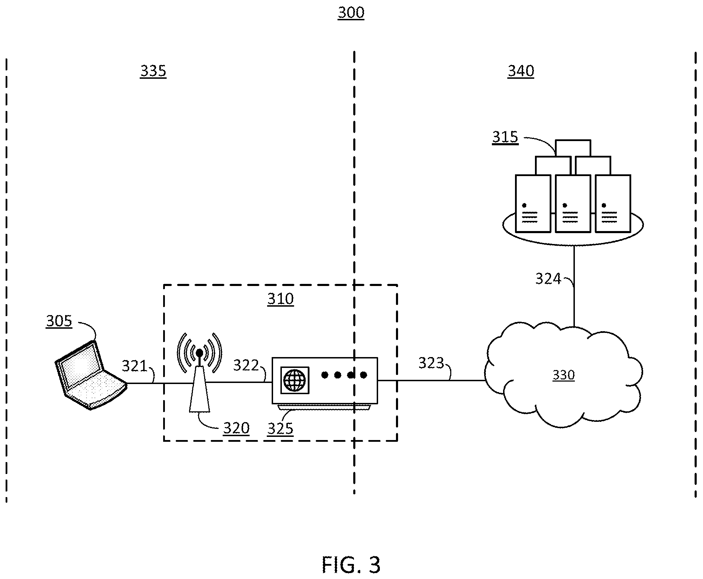

With reference to FIG. 3, a network diagram 300 of a system to offload network processing between a client device 305 and a gateway device 310 is provided, according to some embodiments. Included is a client device 305 coupled, via the gateway device 310, with a server 315.

The client device 305 and the server 315 can exchange data (e.g., packets). Some packets can include latency sensitive information. Latency sensitive information can refer to or include information which, if delayed, can impact a functionality of a client device as perceptible to a user. For example, latency sensitive information can include video data or audio data of a stream, control data associated with a time-out, or so forth. In the event of a dopped packet (also referred to as a lost packet, without limiting effect), the packet loss can be detected and re-transmitted upon the detection of the loss. However, such re-transmission can increase latency due to a delay prior to detection and the retransmission time itself. At least a portion of such a delay may be incurred while awaiting a detection or transmission by a client device 305. For example, the client device 305 may prioritize other traffic, remain in a sleep state, or otherwise delay the detection or retransmission.

Some client devices 305 may be power or compute-limited such that handling retransmission may adversely affect device performance (e.g., decrease battery life or reduce compute cycles available to other processes). Further still, some client devices 305 may implement limited hardware or software functionality of a network stack, to preserve compute resources (e.g., for an IOT device). Thus, according to some embodiments of the present disclosure, in the event of a lost or dropped packet between the client device 305 and the server 315, the gateway device 310 can cause a retransmission of an outbound or inbound packet. For example, the gateway device 310 can cause the retransmission without explicit instruction from the client device 305.The gateway device 310 can include one or more devices configured to couple the client device 305 with the server 315. For example, the gateway device 310 can include an access point (AP) 320 to provide connectivity along a communication or signal path between the client device 305 and the server 315, and a cable modem 325 to provide a wired link between the client device 305 and the server 315. In some embodiments, the server 315 can host a service or microservice addressed by the client device 305 or a network device disposed between the client device 305 and another server 315 hosting a service or microservice addressable by the client device 305. For example, the server 315 can include a server 315 to manage latency between the client device 305 and a host for a service, such as via the systems and methods employed by the network device described herein (e.g., the retransmission or other management of latency sensitive packets).

The management of latency sensitive packets (e.g., for retransmission), as implemented by the gateway device 310, can implement or model a networking stack. Such an implementation may be transparent to an application of the client 305 or server. For example, the application can interface with a same driver, memory map, local service, or so forth. For example, incident to establishing a connection between the client 305 and the server 315, a networking stack located on the gateway 310 may be substituted for a networking stack on the client device 305. The substitution of the network stack may be performed by a local service of the client 305 or server 315, or via an interface with a further device. For example, a BQUICK server, such as the BQUICK_TOP server 1005, BQUICK_ISP servers 1012A, 1012B, or another remote device can interface with the client 305, gateway device 310, or server 315 to cause an instantiation of the full or modeled stack at the gateway device 310, or an interface with such a stack at either of the client device 305 or server 315. As indicated above, such an approach may be implemented as transparent to an application of the client device 305 or server 315 (e.g., application layer process).

The communication or signal path can include a first medium 321 (e.g., a wireless medium) between the client device 305 and the AP 320, a second medium 322 (e.g., an Ethernet link) between the AP 320 and the cable modem 325. The references to such links as wired and wireless is not intended to be limiting. For example, in some embodiments, cable modem can provide a wireless path (e.g., a long term evolution (LTE) modem for a phone network), and the AP can be substituted for a wired link, such as an Ethernet cable with a hub, switch, or router. In some embodiments, the gateway device 310 can include one or more devices, such that the AP 320 or cable modem 325, along with further devices such as a router, firewall, or application host can be implemented on a same device including one or more processors, or a combination of devices including, at least collectively, one or more processors. Further, the various connections can include further intermediate connections, such as additional proxies, servers, routers, firewall devices, and so forth. For example, the connection between the ISP 330 and the server 315 can include connections to further ISPs 330, CDN networks, or other servers 315.

The gateway device 310 can couple with the server 315 via one or more public or private networks, such as the Internet. For example, the gateway device 310 can couple with the servers 315 via an ISP 330 or other network interchange. The gateway device 310 can operate as a gateway between a first network 335 and a second network 340. For example, the first network 335 can include a residential, commercial, or industrial local area network. The second network can include a third medium 323 (e.g., an HFC link) between the modem and the ISP 330 and a fourth medium 324 (e.g., a single mode fiber connection) to connect with the server 315. As indicated above with regard to the first network 335, the illustrative connections provided are not intended to be limiting. For example, some networks can include microwave or satellite based links as a part of either of the third medium 323 or fourth medium 324. Further, any of the mediums provided herein can include additional devices (e.g., switches, routers, signal repeaters, firewalls, and so forth). Either of the first network 335 or the second network 340 can be subdivided into further networks. For example, the ISP can implement a third network, and the server 315 can be disposed in a fourth network, separated from the Internet by a further gateway device 310. Similarly, the first network 335 can include various subdivisions such as one or more basic service sets (BSS), subnets, wired LANs, IOT networks (e.g., Bluetooth, ZigBee, or controller area network (CAN) devices).

The implementation of a full or modeled stack at the gateway device 310 instead of (or in addition to) a stack implemented at the client device 305 (or server 315) can lower a power use of the client, as energy use incident to stack operation may be consumed at the gateway device 310 instead of the client device 305 (or server 315). Such an offloading may be particularly beneficial when the client device 305 (or server 315) is compute-constrained, power-constrained, thermally-constrained, etc. For example, offloading energy usage from a battery powered IOT or mobile device to a mains-powered gateway device 310 can increase battery life. Moreover, such offloading can improve latency for uplink or downlink packets. For example, (uplink or downlink) communications exchanged over the first medium 321 or second medium 322 may be via a buffer copy protocol which is less computationally expensive than a network stack such as TCP/IP. Such a protocol may reduce latency and power use for connected devices. The third medium 323 or fourth medium 324 may use a full or modeled stack (e.g., TCP/IP stack) to maintain connectivity with an ISP 330 operating over such protocols.

Although, for simplicity, the client device 305 is depicted as a sole non-AP STA of the first network 335, the first network 335 may include any number of client devices 305 (e.g., STA devices). For example, a residential network can include various mobile phones, tablets, smart home devices, laptop or desktop computers, etc. The various client devices 305 can include any number of wired (e.g., Ethernet) or wireless (e.g., Wi-Fi) devices. The gateway device 310 can implement the methods described herein with respect to multiple such devices, such as by maintaining a separate instance of a socket buffer copy for each client device 305, or a subset of such devices (e.g., devices supporting such operation and identified as exchanging latency sensitive data). The identification of the subset of devices may be provided or based on request/response messages initiated by either of the client devices 305 or the gateway device 310. Such identification can be provided incident to device association or subsequent thereto.

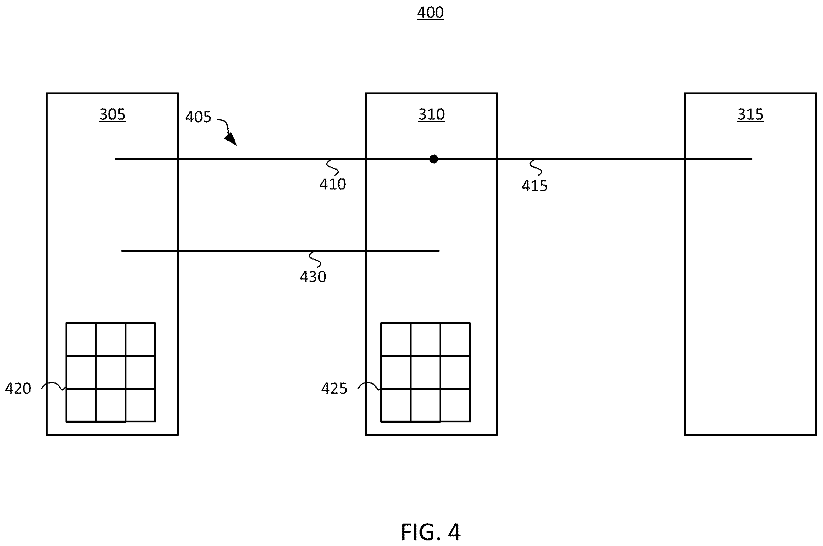

FIG. 4 is a network diagram 400 for a system to offload network processing between a client device 305 and a gateway device 310, according to some embodiments. For example, the network diagram 400 can correspond to the system depicted in the physical network diagram 300 of FIG. 3, or other networks including a gateway device 310 between a client device 305 and a server 315. The logical network diagram 400 depicts a logical connection between the client device 305 and the server 315, which may include a transport layer connection 405. The transport layer connection 405 can pass through any number of devices, such as devices of an ISP 330 or other network (e.g., Internet) backbone devices routers, switches, hubs, or firewalls.

A buffer 420, such as a socket buffer 420 is disposed on the client device 305. The buffer 420 can store a queue of messages for transmission to the server 315, or a record of messages received therefrom. A copy of the buffer 425 is disposed on the gateway device 310, as provided by a pipe 430 from the client device 305 to the gateway device 310. Like the transport layer connection 405, the pipe 430 can pass through any number of devices. For example, the pipe 430 can extend through various network devices of a local area network, such as a local area network of a residential computing environment.

The logical connection between the client device 305 and the server 315 (e.g., the transport layer connection 405) includes a first portion 410 extending between the client device 305 and the gateway device 310, and a second portion 415 extending between the gateway device 310 and the server 315. A demarcation between the first portion 410 and second portion 415 may be transparent to the client device 305 or the server 315. For example, the client device 305 may address the server 315 at the transport level, and the gateway device can facilitate the connection.

The gateway device 310 can model a network stack (e.g., a transport layer stack) to inspect, generate, or forward packets between the client device 305 and the server 315. For example, the modeled stack can selectively implement protocol features to detect a dropped packet, and generate a retransmission of the dropped packet or request a retransmission of the dropped packet from another device. For example, upon detection of a dropped packet, such as an uplink or upstream packet, the gateway device 310 can retransmit an instance of the dropped packet. The retransmitted instance of the packet can be a copy of an originally transmitted packet, or can include changes to one or more fields, according to a protocol or a particular implementation thereof. Such changes can include, for example, an adjustment to a time to live value (TTL), an incremented sequence number, a modified timestamp to accord with a retransmission time, setting of retransmission flags or other indicators, or a checksum adjustment to accord with other changed values.

The transport layer connection 405 (or other type of connection between the client device 305 and the server 315) may be an encrypted channel or otherwise encrypted. For example, the first portion 410 and the second portion 415 can be encrypted according to a shared key or key pair between the server 315 and at least one of the client device 305 or the gateway device 310. That is, in some embodiments, the gateway device 310 may not have cryptographic information or a key to decrypt packets exchanged over the transport layer connection 405. The gateway device 310 may access header data which is modified for retransmission, or inspected to detect packet loss. In some embodiments, the gateway device 310 may retransmit a copy of the packet upon a detection of a loss of packet. For example, the gateway device 310 can detect packet loss or packet drop according to a content of the copy of the buffer 425 and retransmit an encrypted packet based thereupon. In some embodiments, the retransmission may omit any changes, even where such changes (e.g., sequence number incrementing) are included in a protocol. In some embodiments, the gateway device 310 and the client device 305 have exchanged or have shared or otherwise have cryptographic information, such as one or more keys for encryption or decryption include, such that the client device 305 and/or gateway device 310 can decrypt a packet, modify the contents thereof, and re-encrypt the modified packet.

In some embodiments, the client device 305 does not receive a key from another device. For example, a portion of the connection between the client device 305 and gateway device 310 may be a plain-text or unencrypted link, and the portion of the connection between the gateway device 310 and the server 315 may be a ciphertext or encrypted link. That is, in some implementations, the encryption may be offloaded from the client device 305 to the gateway device 310. Such an implementation can reduce a compute demand of a client device 305 and aid the gateway device 310 to change packet content, though such an implementation may be avoided in some cases (e.g., where the first portion 410 of the logical connection is along a potential threat surface).

The copy of the buffer 425 can be provided via a pipe 430 between the client device 305 and the gateway device 310. The pipe 430 may be provided via a sideband link or via a same physical medium. For example, the pipe 430 can be provided according to a lower level of a network stack as the first portion 410 and the second portion 415, or along a same layer of a network stack. In some embodiments, the pipe 430 is established at the transport level. For example, the pipe 430 can be established (and updated) using a user datagram protocol (UDP). In some embodiments, the logical connection between the client device 305 and the server can be at a transport level, and the pipe 430 can be established at a lower level. The lower level can include a data link layer, such as a machine access control (MAC) layer to establish the pipe 430 and convey updates to the copy of the buffer 425.

The pipe 430 can be implemented according to a push or pull model. For example, the gateway device 310 can poll the client device for updates, the client model can push updates according to a predefined time or location in a loop, or the client model can push updates based on interrupt driven logic (e.g., corresponding to updates to the buffer 420).

The gateway device 310 can detect a drop of or loss of a packet between the client device 305 and the server 315. For example, the gateway device 310 can detect a drop of a packet along an uplink from the client device 305 to the server 315, or a drop of a packet along a downlink from the server 315 to the client device 305. For example, in some embodiments, the gateway device 310 can detect a non-sequential sequence number indicative of a lost packet. In some embodiments, the gateway device 310 can detect a receipt of a non-acknowledgement (NACK), or absence of an acknowledgement (ACK) packet prior to a closure of a time period from a packet transmission along the uplink or downlink. In some embodiments, the gateway device 310 can detect a lost packet according to a TCP flag (e.g., retransmission flag), or according to a change in a delay between packet arrival or transmission times. In some embodiments, the gateway device 310 can determine a packet loss according to a comparison between the data of the copy of the buffer 425 and packets seen over the logical connection.

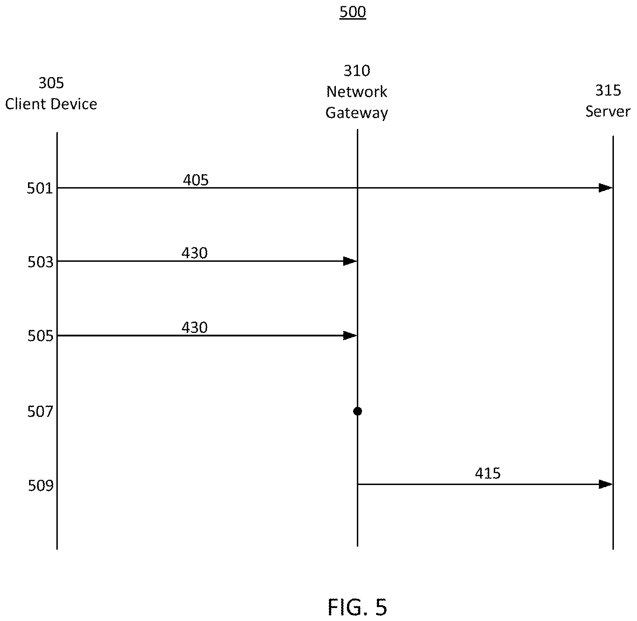

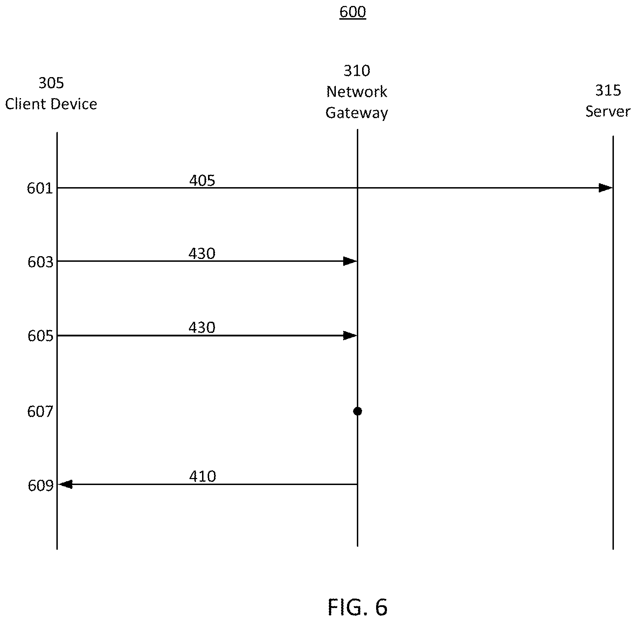

FIG. 5 is a sequence diagram for a method 500 of offloading network processing, according to some embodiments. The depicted operations may be employed in combination or individually. That is, according to various embodiments, the depicted operations may be employed with each other, with other operations disclosed herein, or further operations employed in wireless networks generally. The depiction of various operations on the sequence diagrams of the methods 500, 600 of FIGs. 5 and 6 are merely intended to enhance the readability and clarity of the figures and are not indicative of a preferred or coupled combination of features.

For brevity a brief overview, the sequence diagram depicts a sequence of operations between a client device 305, gateway device 310, and server 315 as shown in FIG. 3. The operations can be performed with various network devices. For example, in some embodiments, the operations performed by the gateway device 310 can be performed by another device, such as a network device of a local area network, an ISP 330, or proximal to the server 315 (e.g., the first network 335 or second network 340 of FIG. 3). Further, the various operations of the sequence diagram are not limited to the operations described herein. Operations may be omitted, added, substituted, or modified. In some instances, one gateway device 310 may perform the operations of the present method 500 with respect to various client devices 305, via separate transport layer connections 405, pipes 430, and copies of socket buffers 425 corresponding thereto.

At operation 501, the client device 305 establishes a transport layer connection 405 with a server 315. For example, the transport layer connection 405 can include a TCP or UDP connection. The transport layer connection 405 can span one or more networks via a gateway device 310 (e.g., one of an access point or a modem). For example, the client device 305 can be in wireless communication with the gateway device 310. The client device 305 and the server 315 can engage in a handshake process (e.g., three-way handshake for TCP) in some embodiments. In a UDP implementation, the connection can be established locally without establishing a persistent connection with a corresponding device.

The transport layer connection 405 may be established to communicate between devices, such as for a low latency application one of the client device 305 or the server 315. For example, the low latency application can include applications 1056A, 1056B, 1058A, or 1058B. The server 315 can be or be in communication with the latency server (e.g., a BQUICK_TOP server 1005), or other server (e.g., server 1012A or server 1012B). The gateway device 310 or client device 305 can be in communication with a device hosting one or more resources of the applications 1056A, 1056B, 1058A, or 1058B. In some embodiments, the gateway device 310 or client device 305 can host one or more resources of the applications 1056A, 1056B, 1058A, or 1058B.

A latency server, such as the e.g., a BQUICK_TOP server 1005 of FIG. 1 may monitor network traffic to identify low latency applications or traffic associated therewith. The latency server can communicate with the gateway device 310 or client device 305 to perform the techniques/operations provided herein for low latency applications using the transport layer connection 405 between the client device 305 and server 315 providing application resources. The latency server (e.g., the BQUICK_TOP server 1005) may instruct the gateway device 310 or client device 305 when and for which low latency applications (e.g., application types, such as audio or video applications) or transport layer connections (e.g., transport layer connections corresponding to the low latency applications) to use the techniques/operations herein. In some embodiments, a latency application 1056A, 1056B, 1058A, 1058B on the gateway device 310 or client device 305 may detect a low latency application running between the client device 305 and server 315 and instruct the gateway device 310 or client device 305 to use the techniques and operations herein for the transport layer connection 405 for the low latency application. Employment of such operations can reduce a latency for packet conveyance associated with such application.

In some embodiments, the BQUICK_TOP server 1005 or other latency server communications with latency applications on gateway devices 310 and client device 305 to instruct which low latency application connections (e.g., TCP or UDP connections) to apply these techniques/operations to improve latency. In some embodiments, the latency server can provide a port number or header field associated with a latency sensitive application. In some embodiments, the latency server can append a tag to a packet to identify latency sensitive information. In some embodiments, the latency server can provide a list of applications, ports, sources, destinations, or other indicia of an application type, or content type of a packet. The client device 305 or gateway device 310 can receive the indicia of application type and perform one or more operations described herein according to an identification of a correspondence between the packet and the application.

In some embodiments, the connection (or a portion thereof) may be encrypted. For example, the transport layer connection 405 can be encrypted between the client device 305 and the server 315 or between a gateway device 310 and at least one of the client device 305 and the server 315. In some embodiments, the client device 305 can convey a key for the connection to the gateway device 310, or the gateway device 310 can edit header data without a key to decrypt payload data.

At operation 503, the client device 305 establishes a pipe 430 with the gateway device to transfer data (e.g., the gateway device 310 of FIG. 3). In some embodiments, the pipe 430 is established at a lower level of the network stack than the transport layer connection 405 of operation 501. For example, the client device 305 can establish the pipe 430 at a data link layer such as a MAC layer. According to various embodiments, the pipe 430 may be established prior to, mutually with, or subsequent to the establishment of the transport layer connection 405. In some embodiments, the pipe 430 may be established via communication over a transport layer connection 405 different from the transport layer connection 405 established with the server 315 (e.g., over a gateway uplink connection formed according to an association of the client device 305 with the gateway device 310).

At operation 505, the client device 305 communicates, via the pipe 430, to the gateway device 310, a copy 425 of one or more buffers 420. For example, the buffer 420 can be for more sockets used for the transport layer connection 405 by the client device 305. Upon communication of the copy 425 of the buffer data, the gateway device 310 can locally store a copy of the buffer 425. The communication of the copy of the buffer 425 can be effected according to a conveyance of an update of the contents of an entire buffer 420 or a subset thereof. For example, the client device 305 can communicate an incremental copy including a difference between a previously communicated buffer copy or a default state (e.g., at system boot or network association).

At operation 507, the gateway device 310 detects a loss of a packet for the transport layer connection 405 between the client device 305 and the server 315. For example, the gateway device 310 can detect a lost uplink packet provided from the client device 305 to the server 315. The gateway device 310 can monitor either or both of the copy of the buffer 425 or the transport layer connection 405 itself. For example, the gateway device 310 can detect packet loss according to a detection of an indicia in a header of a packet, or a timing between multiple packets.

The detection of the loss of the packet may vary according to a particular implementation. For example, for an encrypted link, the gateway device 310 may access the header data of one or more packets to determine the packet loss (e.g., according to a sequence number), in some embodiments. For an encrypted connection such as a tunnel, the gateway device 310 may have or receive cryptographic information such as one or more keys to decrypt packets and inspect packets. In some embodiments, the gateway device may detect the packet loss according to data of the socket buffer or a timing or the size of data packets. In some embodiments, the gateway device 310 may detect packet loss based on failure to receive acknowledgment packets for receipt of the packet or timeout from receiving an acknowledge packet.

At operation 509, the gateway device 310 causes a re-transmission of the packet to the server 315. In some embodiments, prior to operation 509, the gateway device 310 can detect an outbound packet, such as where a packet is dropped between the gateway device 310 and the server 315. In some embodiments, the gateway device 310 may detect an absence of the packet, such as where the packet is dropped between the client device and the gateway device 310, or according to a tunnel link (e.g., a VPN or IPSEC). The gateway device 310 can employ a transport layer stack or a modeled transport layer stack to generate a packet to replace the dropped packet. The modeled transport layer stack can include functionality to adjust one or more header fields of the packet (e.g., sequence numbers, retransmission flags, timestamps, checksums, or TTL values) to retransmit the packet.

In some embodiments, the gateway device 310 can cause the re-transmission of the packet without further action by the client device 305. For example, the gateway device 310 can cause the retransmission over the second portion 415 of the link between the client device 305 and the server 315. In some embodiments, the gateway device 310 may not forward a message from the server 315 to the client device 305. For example, the gateway device 310 can cause re-transmission of the packet and omit forwarding associated network messaging from the server 315 to the client device 305 to prevent the client device 305 from generating a packet which is duplicative with the packet generated by the modeled transport layer stack of the gateway device 310.

FIG. 6 is a sequence diagram for a method 600 for offloading network processing, according to some embodiments. The depicted operations may be employed in combination or individually. That is, according to various embodiments, the depicted operations may be employed with each other, with other operations disclosed herein, or further operations employed in wireless networks generally.

At operation 601, the client device 305 establishes a connection (e.g., a transport layer connection 405) with a server 315. At operation 603, the client device 305 establishes a pipe 430 with the gateway device to transfer data thereto. At operation 605, the client device 305 communicates, via the pipe 430, to the gateway device 310, a copy 425 of one or more buffers 420. Such operations can be performed according to the description of operations of 501, 503, and 505 of the method 500 of FIG. 5, above.

At operation 607, the gateway device 310 detects a loss of a packet for the transport layer connection 405 between the client device 305 and the server 315. For example, the gateway device 310 can detect a lost downlink packet provided from the server 315 to the client device 305. The gateway device 310 can detect the lost packet according to any of the techniques described with respect to operation 507, or otherwise herein, or as otherwise provided in the present disclosure, though not limited thereby. The detection of the lost packet may vary between an uplink (e.g., from the client device 305 to the gateway device 310) and downlink configuration (e.g., from the gateway device 310 to the client device 305). For example, an omission of an ACK response to a packet of a TCP link can be employed to detect dropped uplink packets and a mis-ordered sequence number can be employed to detect dropped downlink packets. In some embodiments, the gateway device 310 can detect a loss of a packet between the server 315 and the gateway device 310 (e.g., according to an omission of an ACK or other expected). In some embodiments, the gateway device 310 can detect a loss of a packet between the gateway device 310 and the client device (e.g., according to an omission of a receipt in the copy of the buffer 425 accessible to the gateway device 310).

At operation 609, the gateway device 310 can cause a retransmission of a packet based on a detected loss between the gateway device 310 and the client device 305. For example, where the gateway device 310 observes a packet received along the second portion 415 of the link between the client device 305 and the server 315, and does not detect an indication in a subsequent update of the socket buffer, or responsive to an absence of an update.

In some embodiments, further or other operations can be included in the method 600. For example, based on a detected loss of a packet between the gateway device 310 and the client device 305. Responsive to such a detection, the gateway device 310 can provide an indication of the dropped packet to the server 315 over the second portion 415 of the link between the client device 305 and the server 315, to cause the server 315 to retransmit the packet. For example, the indication can be provided as addressed to the server 315 and from the client device 305. Thereafter, the server can retransmit a packet to the client device 305.

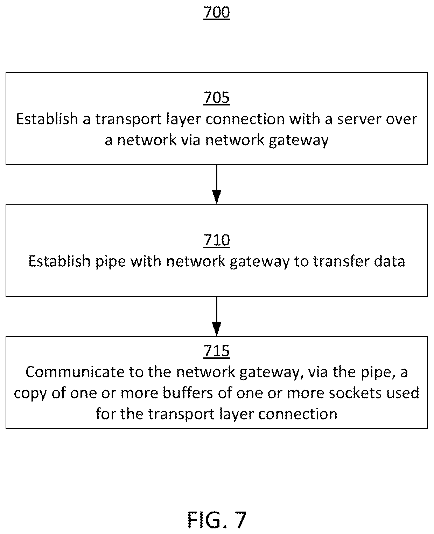

Referring now to FIG. 7, a flow diagram of a method 700 for offloading network processing is provided, according to some embodiments. The method 700 may be performed by a network connected device, or a combination of network connected devices. For example, one or more of operations 705, 710, or 715 may be performed by the client device 305. Further, the method 700 may be performed in concert with operations of further devices, such as the gateway device 310 and the server 315.

At operation 705, the method 700 includes establishing a transport layer connection 405 with a server over a network via the gateway device 310. For example, the client device 305 can establish a TCP or UDP connection with the server 315. In some embodiments, the transport layer connection 405 is established by the client device located in a residential computing environment. For example, the transport layer connection 405 can be via an Internet Service Provider (ISP) providing access to the Internet via the gateway device 310 (e.g., one of the access point 320 or the modem (e.g., the cable modem 325 depicted in FIG. 3)).

In some embodiments, the gateway device 310 can establish, using the copy of the buffer 425, a transport layer stack for the transport layer connection 405 between the server 315 and the client device 305. In some embodiments, the gateway device 310 can model such a transport layer stack using the copy of the buffer 425. For example, the modeled stack can include a subset of features of a stack, such as to implement features associated with retransmission and packet generation associated therewith. In some embodiments, the gateway device 310 is configured to handle encryption or decryption of packets communicated via the transport layer connection 405 between the client device 305 and the server 315, such as to compare the packet data to buffer copy data, or to otherwise detect indicia of lost packets.

At operation 710, the method 700 includes establishing a pipe 430 with the gateway device 310 (e.g., one of the access point or the modem) to transfer data. For example, the client device 305 can establish a connection at a level below the transport layer connection 405, or a same layer as the transport layer connection 405. For example, the client device 305 can establish the pipe 430 at the MAC layer, or using UDP.

At operation 715, the method 700 includes communicating to the gateway device 310, via the pipe 430, a copy of one or more buffers of one or more sockets used for the transport layer connection. For example, the client device 305 can update the copy of the buffer 425 periodically, responsive to a change in the buffer, or responsive to application level data (e.g., NACKs or other indicia of dropped packets).

In some embodiments, the method 700 can include additional, fewer, or different operations. For example, in some embodiments, the gateway device 310 is configured to detect a loss of a packet for the transport layer connection between the client device 305 and the server and causing re-transmission of the packet from the server.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure may reference terms such as "first" and "second" in connection with devices, mode of operation, transmit chains, etc., for purposes of identifying or differentiating one from another or from others. These terms are not intended to merely relate entities (e.g., a first device and a second device) temporally or according to a sequence, although in some cases, these entities may include such a relationship. Nor do these terms limit the number of possible entities (e.g., devices) that may operate within a system or environment. The terms coupled or connected includes indirect and direct couplings and connections.

It should be understood that the systems described above may provide multiple ones of any or each of those components and these components may be provided on either a standalone machine or, in some embodiments, on multiple machines in a distributed system. In addition, the systems and methods described above may be provided as one or more computer-readable programs or executable instructions embodied on or in one or more articles of manufacture. The article of manufacture may be a floppy disk, a hard disk, a CD-ROM, a flash memory card, a PROM, a RAM, a ROM, or a magnetic tape. In general, the computer-readable programs may be implemented in any programming language, such as LISP, PERL, C, C++, C#, PROLOG, or in any byte code language such as JAVA. The software programs or executable instructions may be stored on or in one or more articles of manufacture as object code.

While the foregoing written description of the methods and systems enables one of ordinary skill to make and use what is considered presently to be the best mode thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure. The headings provided in this document are non-limiting.

The applications and servers have been described above with the aid of functional building blocks illustrating the performance of certain significant functions. The boundaries of these functional building blocks have been arbitrarily defined for convenience of description. Functions and structures can be integrated together across such boundaries. Alternate boundaries could be defined as long as the certain significant functions are appropriately performed. Similarly, flow diagram blocks may also have been arbitrarily defined herein to illustrate certain significant functionality. To the extent used, the flow boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

## Claims

1. A method for offloading network processing from a client device (305) to one of an access point (320) or a modem (325), the method comprising:
establishing, by a client device (305), a transport layer connection (405) with a server (315) over one or more networks via one of an access point (320) or a modem (325), the client device (305) in wireless communication with one of the access point (320) or the modem (325);
establishing, by the client device (305), a pipe (430) with one of the access point (320) or the modem (325) to transfer data; and
communicating, by the client device (305) via the pipe (430) to one of the access point (320) or the modem (325), a copy of one or more buffers (420) of one or more sockets used for the transport layer connection (405) by the client device (305),
wherein one of the access point (320) or the modem (325) is configured to use the copy of the one or more buffers (420) to handle re-transmission of one or more packets to the server (315) via the transport layer connection (405) instead of the client device (305).

2. The method of claim 1, further comprising establishing, by the client device (305) located in a residential computing environment, the transport layer connection (405) with the server (315) via an Internet Service Provider, ISP, providing access to the Internet via one of the access point (320) or the modem (325).

3. The method of claim 1 or 2, further comprising establishing, by one of the access point (320) or the modem (325) using the copy of the one or more buffers (420), a transport layer stack for the transport layer connection (405) between the server (315) and the client device (305).

4. The method of any of claims 1 to 3, further comprising modeling, by one of the access point (320) or the modem (325) using the copy of the one or more buffers (420), a transport layer stack for the transport layer connection (405) between the server (315) and the client device (305) instead of using a transport layer stack.

5. The method of any of claims 1 to 4, further comprising establishing the pipe (430) at a layer in a network stack below the transport layer.

6. The method of any of claims 1 to 5, further comprising establishing the pipe (430) at a machine access control, MAC, layer.

7. The method of any of claims 1 to 6, further comprising establishing the pipe (430) using a user datagram protocol, UDP.

8. The method of any of claims 1 to 7, wherein one of the access point (320) or the modem (325) is further configured to detect a loss of a packet for the transport layer connection (405) between the client device (305) and the server (315) and causing re-transmission of the packet from the server (315).

9. The method of any of claims 1 to 8, wherein one of the access point (320) or the modem (325) is further configured to handle encryption or decryption of packets communicated via the transport layer connection (405) between the client device (305) and the server (315).

10. A system comprising:
an access point (320) in wireless communication with a client device (305) in a first network and with one or more devices providing access via the Internet to one or more servers (315) on a second network, the client device (305) having a transport layer connection (405) with a server (315) of the one or more servers (315);
one or more processors of the access point (320) configured to:
establish a pipe (430) with the client device (305) to transfer data;
receive, via the pipe (430) from the client device (305), a copy of one or more buffers (420) of one or more sockets used for the transport layer connection (405) by the client device (305); and
use the copy of the one or more buffers (420) to handle re-transmission of one or more packets to the server (315) via the transport layer connection (405) instead of the client device (305).

11. The system of claim 10, wherein the access point (320) is further configured to use the copy of the one or more buffers (420) to establish a transport layer stack for the transport layer connection (405) between the server (315) and the client device (305).

12. The system of claim 10 or 11, wherein the access point (320) is further configured to use the copy of the one or more buffers (420) to model a transport layer stack for the transport layer connection (405) between the server (315) and the client device (305) instead of using a transport layer stack.

13. The system of any of claims 10 to 12, comprising at least one of the following features:
(i) wherein the pipe (430) is established at a layer in a network stack below the transport layer;
(ii) wherein a second server (315) causes the access point (320) to transparently offload, to an application of the client device (305), the transport layer connection (405) between the client device (305) and the server (315) to the access point (320) during connection setup between the client device (305) and the server (315);
(iii) wherein the pipe (430) is established using a user datagram protocol, UDP;
(iv) wherein the access point (320) is further configured to detect a loss of a packet for the transport layer connection (405) between the client device (305) and the server (315) and to cause re-transmission of the packet from the server (315) responsive to the detected loss.

14. A system comprising:
a modem (325) in communication with a client device (305) in a first network and providing access to the Internet, the client device (305) having a transport layer connection (405) traversing the modem (325) via the Internet with a server (315) on a second network;
one or more processors of the modem (325) configured to:
receive, via a pipe (430) between the modem (325) and the client device (305), a copy of one or more buffers (420) of one or more sockets used by the client device (305) for the transport layer connection (405) with the server (315);
detect a drop of a packet via the transport layer connection (405); and responsive to the detection, cause re-transmission of the packet by the server (315) via the transport layer connection (405) instead of the client device (305).

15. The system of claim 14, comprising at least one of the following features:
(i) wherein the client device (305) is in communication with the modem (325) via an access point (320);
(ii) wherein the modem (325) is configured to establish or model a transport layer stack for the transport layer connection (405) between the client device (305) and the server (315) during connection setup between the client device (305) and the server (315);
(iii) wherein the one or more processors are configured to receive, from a second server (315), one or more instructions to cause the modem (325) to offload, from the client device (305), the transport layer connection (405) between the client device (305) and the server (315) during connection setup between the client device (305) and the server (315).
